# EUROPEAN PATENT SPECIFICATION

(11) **EP 0 302 497 B1**
(45) Date of publication and mention of the grant of the patent: **24.01.1996**
(21) Application number: 88112724.5
(22) Date of filing: 04.08.1988
(51) Int. Cl.: G11B 7/24

(54) **Data recording medium**
Datenaufzeichnungträger
Support d'enregistrement de données

(30) Priority: 05.08.1987 JP 194429/87; 06.08.1987 JP 195186/87; 20.05.1988 JP 123684/88
(43) Date of publication of application: 08.02.1989
(60) Divisional application: 94102428.3
(73) Proprietor: CANON KABUSHIKI KAISHA, Tokyo (JP)
(72) Inventor: Miyazaki, Takeshi, Ebina-shi Kanagawa-ken (JP); Oguchi, Yoshihiro, Kawasaki-shi Kanagawa-ken (JP); Ohnishi, Toshikazu, Atsugi-shi Kanagawa-ken (JP); Yoshinaga, Kazuo, Machida-shi Tokyo (JP); Kurabayashi, Yutaka, Yokohama-shi Kanagawa-ken (JP); Santoh, Tsuyoshi, Yokohama-shi Kanagawa-ken (JP)
(74) Representative: Bühling, Gerhard, Dipl.-Chem.

(56) References cited:
- EP-A- 0 140 133
- EP-A- 0 242 278
- US-A- 4 320 489
- PATENT ABSTRACTS OF JAPAN vol. 10, no. 21 (M- 499)(2078), 28 January 1986; & JP-A-60179294
- PATENT ABSTRACTS OF JAPAN vol. 9, no. 172 (M-397)(1895), 17 July 1985; & JP-A-60044390
- PATENT ABSTRACTS OF JAPAN vol. 11, no. 389 (P-648), 19 December 1987; & JP-A-62154340
- G.Decobert et al., Liq. Cryst., vol 1, no. 4, pages 307-317 (1986)

## Description

### FIELD OF THE INVENTION AND RELATED ART

The present invention relates to a data recording medium having a recording layer comprising a polymer liquid crystal. More specifically, the present invention relates to a data recording medium having a recording layer comprising a polymer liquid crystal, suitable for use in an optical recording and reproduction apparatus and in the form of a disk, a tape and a card format.

In recent years, research and development of rewritable recording media for use as a large capacity memory, a display, etc., have been extensively made. One of such media has been known to utilize phase transition of a liquid crystal.

For example, a layer of aligned liquid crystal sandwiched between a pair of transparent electrodes or appropriate substrates is optically transparent. If the liquid crystal layer is raised to a temperature above a phase transition temperature (of nematic phase → isotropic phase, or smectic phase → nematic phase) and then suddenly cooled, the liquid crystal layer is not restored to the original transparent state but assumes a light-scattering state. Thus, the resultant contrast can be used for recording and readout. After the writing, the restoration of the liquid crystal phase such as smectic phase is caused by applying an electric field between the electrodes or by heating and gradually cooling the recording medium, thereby to effect erasure. Further, heating with or without voltage application can be used for erasure.

On the other hand, a polymer liquid crystal having a glass transition temperature and an excellent memory characteristic has been recently calling attention. Ordinally, for the heating of a polymer liquid crystal layer, a semiconductor laser which is compact and inexpensive has been frequently used. The oscillation wavelength available by the laser is generally 650 nm or longer, and the laser light power is smaller than that of a gas laser, such as argon laser or helium-neon laser. As an ordinary liquid crystal does not show an absorptivity in such a near infrared region, it has been proposed to incorporate a light-absorbing dye in a liquid crystal layer.

However, a dye showing an absorptivity in the near infrared region is generally not sufficiently thermally stable in a liquid crystal medium, so that it is partially decomposed during repetition of writing-erasure until the recording medium fails to provide a sufficient contrast.

In view of the above problem, it has been proposed to cause light absorption by providing a light absorbing layer of phthalocyanine which is a very stable pigment or dispersing phthalocyanine in a polymer liquid crystal (Japanese Laid-Open Patent Application JP-A (Tokkai) Sho 60-179294).

The JP-A-6 215 43 40 describes an optical recording medium with a recording layer consisting of a cholesteric high polymer liquid crystal containing vanadyl phthalocyanine as a light absorbent. The EP-A- 0 140 133 discloses that optical storage elements can contain coloured discotic polymers which are produced by adding a pleochroitic dye soluble in the discotic polymer. For example, specific phthalocyanines are added to a discotic polymer.

However, the provision of a light-absorbing layer or dispersion of a pigment in the recording layer causes a lowering in efficiency of light absorption for heat generation. The dispersion for recording at minute pits on the order of 1 µm causes undesirable lowering in S/N ratio or scattering by the particles.

As a solution to the above problems, it has been tried to dissolve a stable pigment such as phthalocyanine and reported to dissolve such a pigment in a low-molecular weight liquid crystal, thus showing a possibility of improving the durability of an optical recording system using a low-molecular weight liquid crystal (Japanese Laid-Open Patent Application JP-A (Tokkai) Sho 62-25191).

In addition, while not with respect to a recording medium using a low-molecular weight or polymer liquid crystal, a chemical combination of a polymer and a pigment has been reported as a method for solubilizing a stable pigment (JP-A (Tokkai) Sho 61-232448).

However, in the above-mentioned rewritable data recording media utilizing optical absorption other than one using a recording layer of a polymer liquid crystal and structural fixation by utilizing its phase transition, melting point or glass transition point, the recording layer per se is liable to be degraded, and the recording, reproduction and erasure are liable to be unstable chemically or physically. Further, the contrast in the recording state is low so that the detection and reproduction system may become complicated.

In contrast thereto, a data recording medium having a recording layer comprising a polymer liquid crystal shows an excellent stability and a high contrast, but it requires that a light absorbent is dissolved in a polymer liquid crystal at a substantially molecular level in as large a quantity as possible.

However, colorants or pigments conventionally dissolved in a polymer liquid crystal either have a low solubility in the polymer liquid crystal or remarkably lower the melting point or glass transition point of the resultant liquid crystal phase even if it is dissolved. Further, the liquid crystal phase is liable to be unstabilized or caused to have a lower clearing point so as to have the liquid crystal phase disappear frequently.

For the above problems, it has been difficult to compatibly provide both a high light-absorption efficiency and a stable recording state by the addition of a light absorbent.

### SUMMARY OF THE INVENTION

Accordingly, an object of the present invention is to provide a data recording medium having a recording layer which comprises a polymer liquid crystal and an additive showing an absorptivity to wavelengths in the near infrared region and stably dissolved in the polymer liquid crystal and is free from degradation on repetition of a writing-erasure cycle.

Another object of the present invention is to provide a data recording medium having a recording layer comprising a polymer liquid crystal, which is excellent in reversibility, capable of recording a large optical density difference, capable of essentially stable recording through utilization of the phase transition, melting point or glass transition point of the polymer liquid crystal, and yet capable of realizing stable and sufficient light-absorptivity without causing a lowering in glass transition point or unstabilization of the liquid crystal phase.

According to the present invention, there is provided a data recording medium having a recording layer which comprises a chiral smectic polymer liquid crystal and a colorant selected from the group consisting of metal chelate compounds represented by the formulas (1) to (17) as set out in claim 1 soluble in the chiral smectic polymer liquid crystal.

These and other objects, features and advantages of the present invention will become more apparent upon a consideration of the following description of the preferred embodiments of the present invention taken in conjunction with the accompanying drawings.

### BRIEF DESCRIPTION OF THE DRAWINGS

Figures 1 and 2 are respectively a schematic sectional view showing an embodiment of the data recording medium of the present invention;
Figure 3 is an illustration of an apparatus system for recording, reproduction and erasure on the data recording medium of the present invention; and
Figure 4 is a phase diagram of a polymer liquid crystal composition used in the present invention.

### DESCRIPTION OF THE PREFERRED EMBODIMENTS

The metal chelate compound used according to the present invention include those represented by the following formulas (1) - (17): 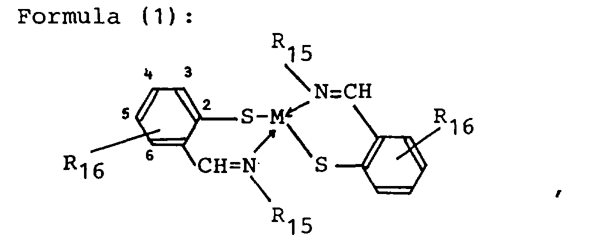 wherein R₁₅ denotes a hydrogen atom, hydroxyl group or alkyl group capable of being connected with another R₁₅; R₁₆ denotes alkyl group, halogen atom, hydrogen atom, nitro group, or benzo condensed group; and M denotes a center metal of Cu, Ni, Co or Pd. 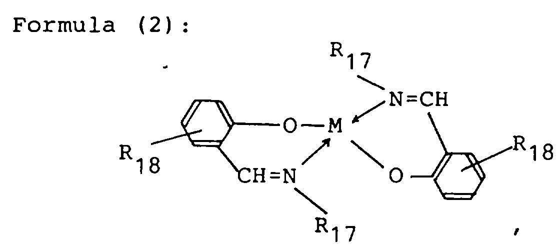 wherein R₁₇ denotes a hydrogen atom, hydroxyl group, alkyl group or aryl group capable of being connected with another R₁₇; R₁₈ denotes a halogen atom, alkyl group, nitro group or condensed benzo group; and M denotes Cu, Ni, Co or Pd. 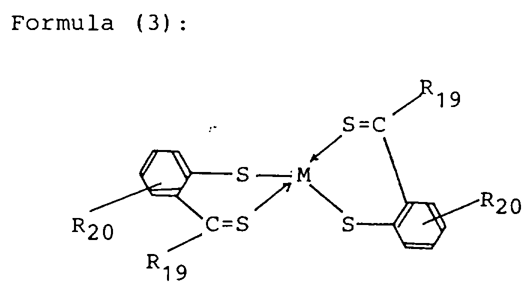 wherein R₁₉ denotes an alkyl group or aryl group; R₂₀ denotes a hydrogen atom, halogen atom, alkyl group, aryl group, nitro group or condensed benzo group; and M denotes Cu, Ni or Pd. 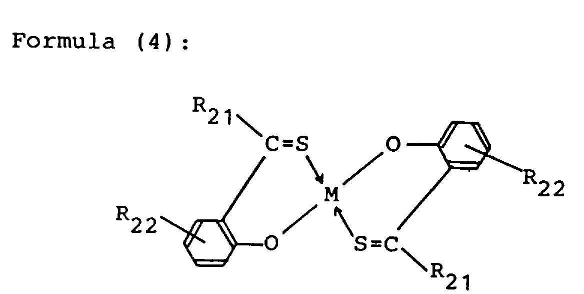 wherein R₂₁ denotes an alkyl group or aryl group; R₂₂ denotes a hydrogen atom, halogen atom, alkyl group or condensed benzo group; and M denotes Cu, Ni or Pd. 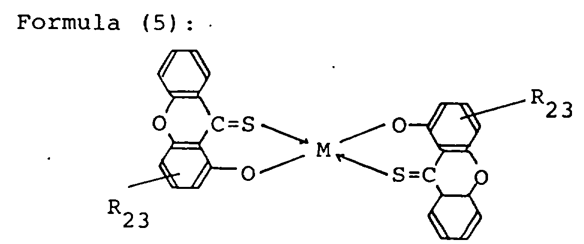 wherein R₂₃ denotes a hydrogen atom or alkyl group; and M denotes Cu or Ni. 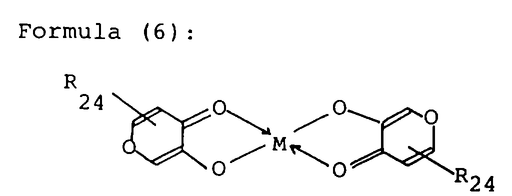 wherein R₂₄ denotes a hydrogen atom or alkyl group; and M denotes Cu, Ni, Co or Mn. 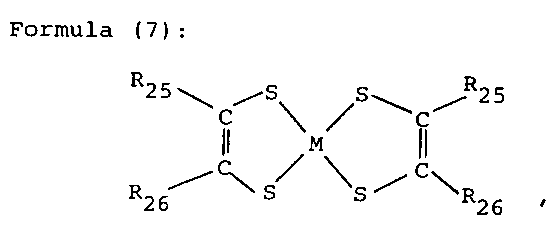 wherein R₂₅ and R₂₆ respectively denote a substituted or non-substituted alkyl group, acyl group or aryl group and R₂₅ and R₂₆ are capable of forming an aromatic ring in combination; M denotes Cu, Ni, Co or Pd which can have a charge and a counter ion. 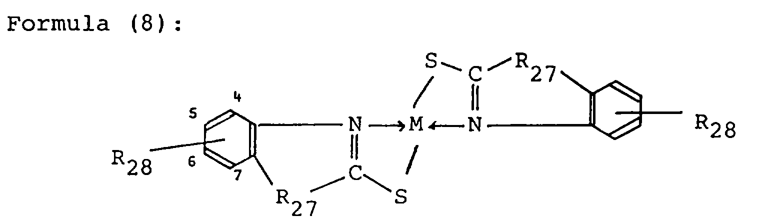 wherein R₂₇ denotes a sulfur atom, substituted or non-substituted amino group, oxygen atom or thioketone group; R₂₈ denotes a hydrogen atom, alkyl group, halogen atom or amino group; and M denotes Zn, Cu or Ni. 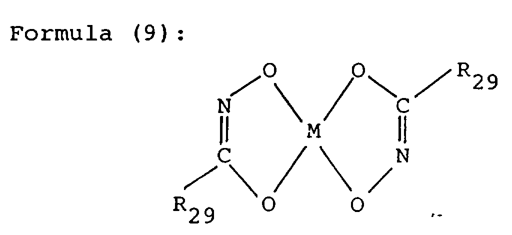 wherein R₂₉ denotes an alkyl group, aryl group or styryl group; and M denotes Cu, Ni or Co. 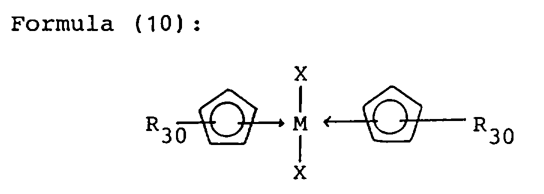 wherein R₃₀ denotes a hydrogen atom, halogen atom, alkyl group, acyl group or aryl group; X is optional and may denote Cl and M denotes Ni or Zr. 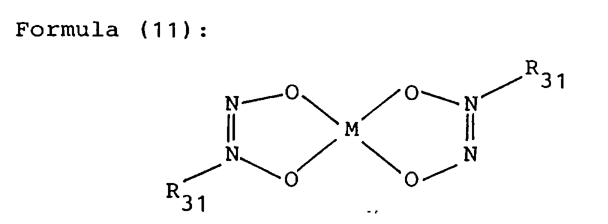 wherein R₃₁ denotes an alkyl group or aryl group; and M denotes Cu, Ni or Co. 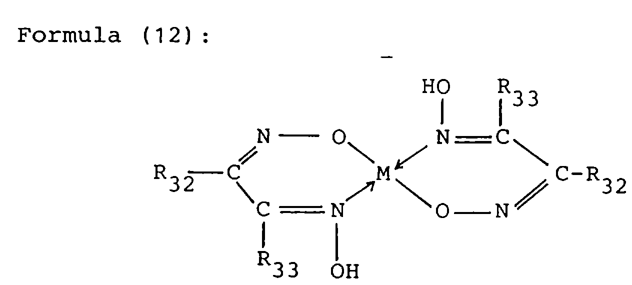 wherein R₃₂ and R₃₃ respectively denote an alkyl group or aryl group; and M denotes Ni. 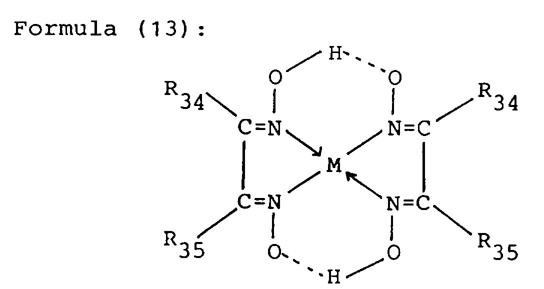 wherein R₃₄ and R₃₅ respectively denote an alkyl group, amino group, aryl group or furan group capable forming an alicyclic ring in combination with each other; and M denotes Ni. 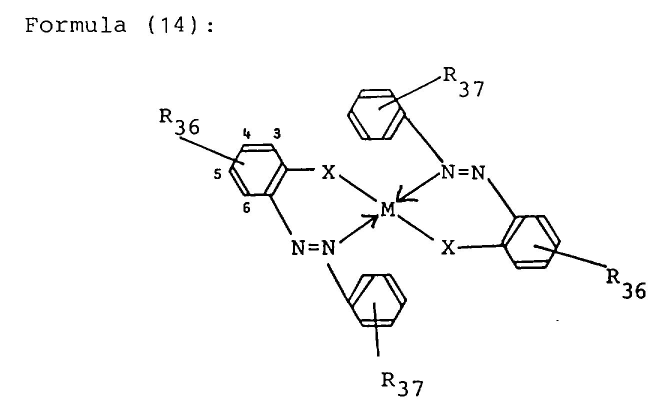 wherein R₃₆ and R₃₇ denote a hydrogen atom, halogen atom or alkyl group; X denotes an oxygen atom or sulfur atom; and M denotes Ni. 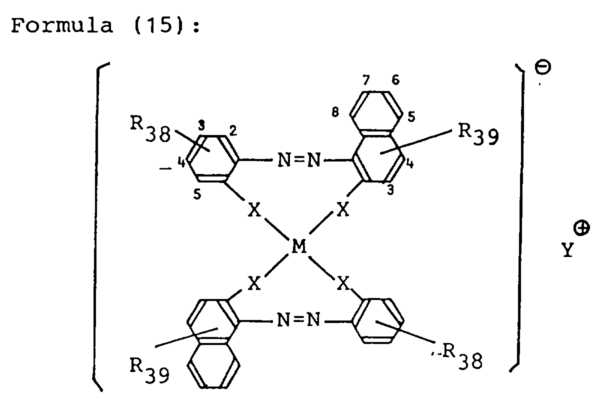 wherein R₃₈ and R₃₉ respectively denote a hydrogen atom, alkyl group, halogen atom or nitro group; X denotes an oxygen atom or sulfur atom; M denotes Ni; and Y ^{⊕} denotes a quarternary ammonium cation. 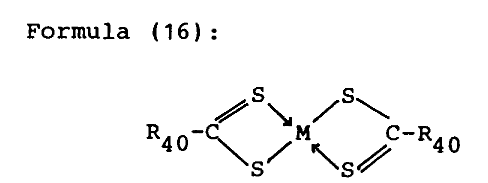 wherein R₄₀ denotes an amino group; and M denotes Cu, Ni, Co or Pd. 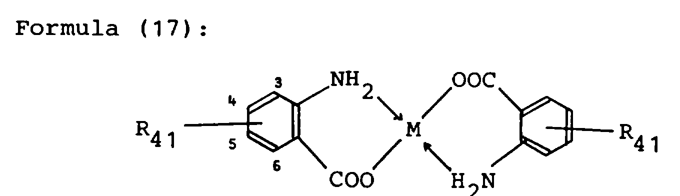 wherein R₄₁ denotes a hydrogen atom, halogen atom, alkyl group, acyl group, nitro group or alkoxyl group; and M denotes Zn, Cu, Ni or Co.

Next, some representative examples of the compounds represented by the above formulas (1) - (17) are listed in the following Table 1, but the metal chelate compounds usable in the present invention are not limited thereto.

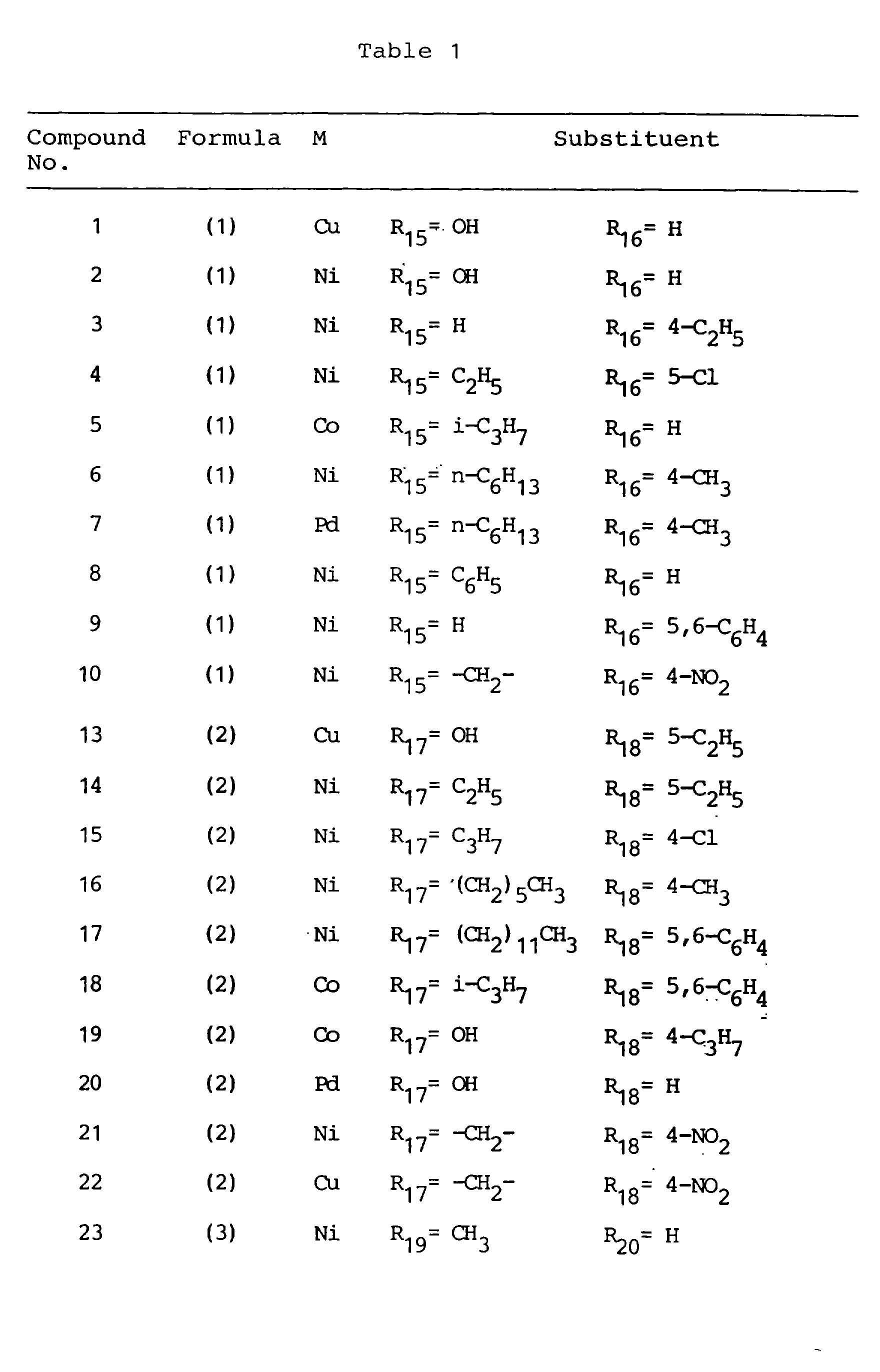

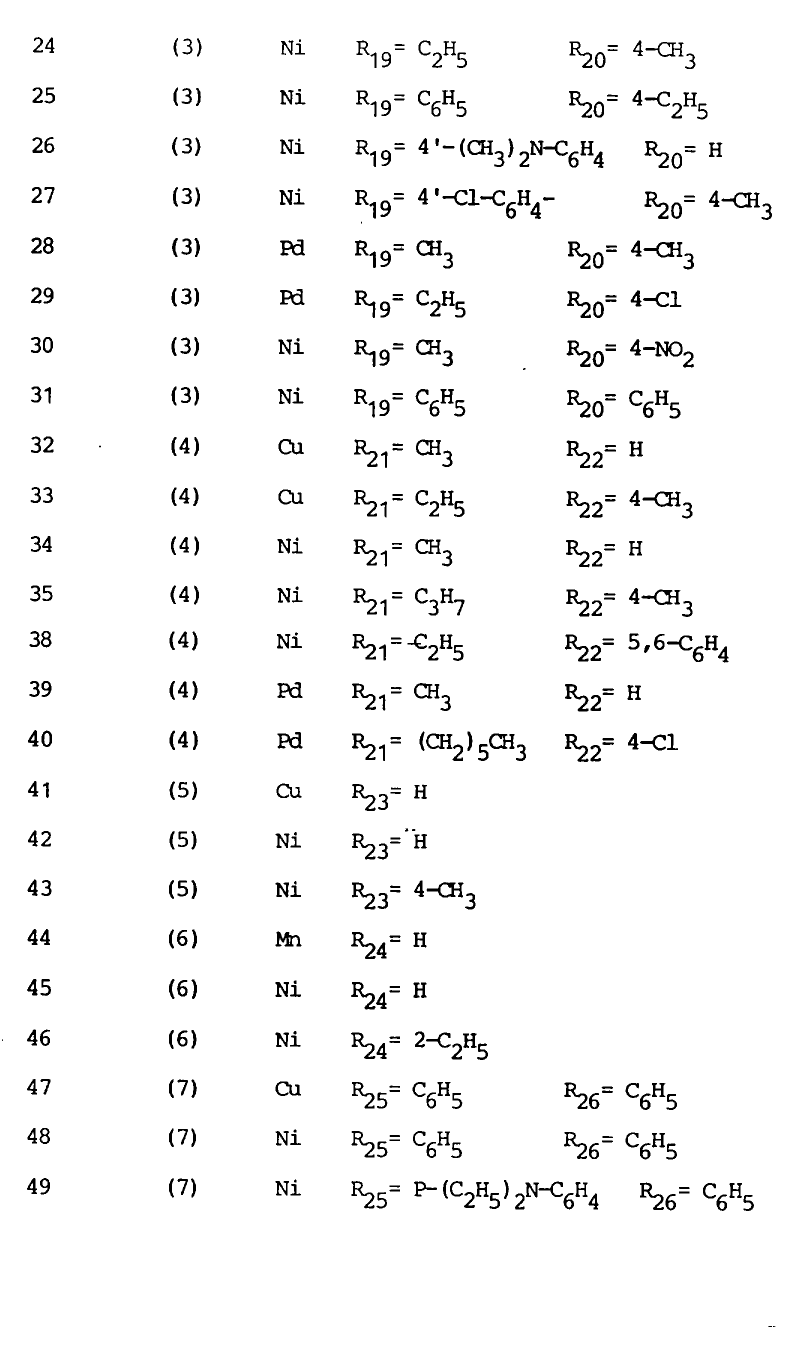

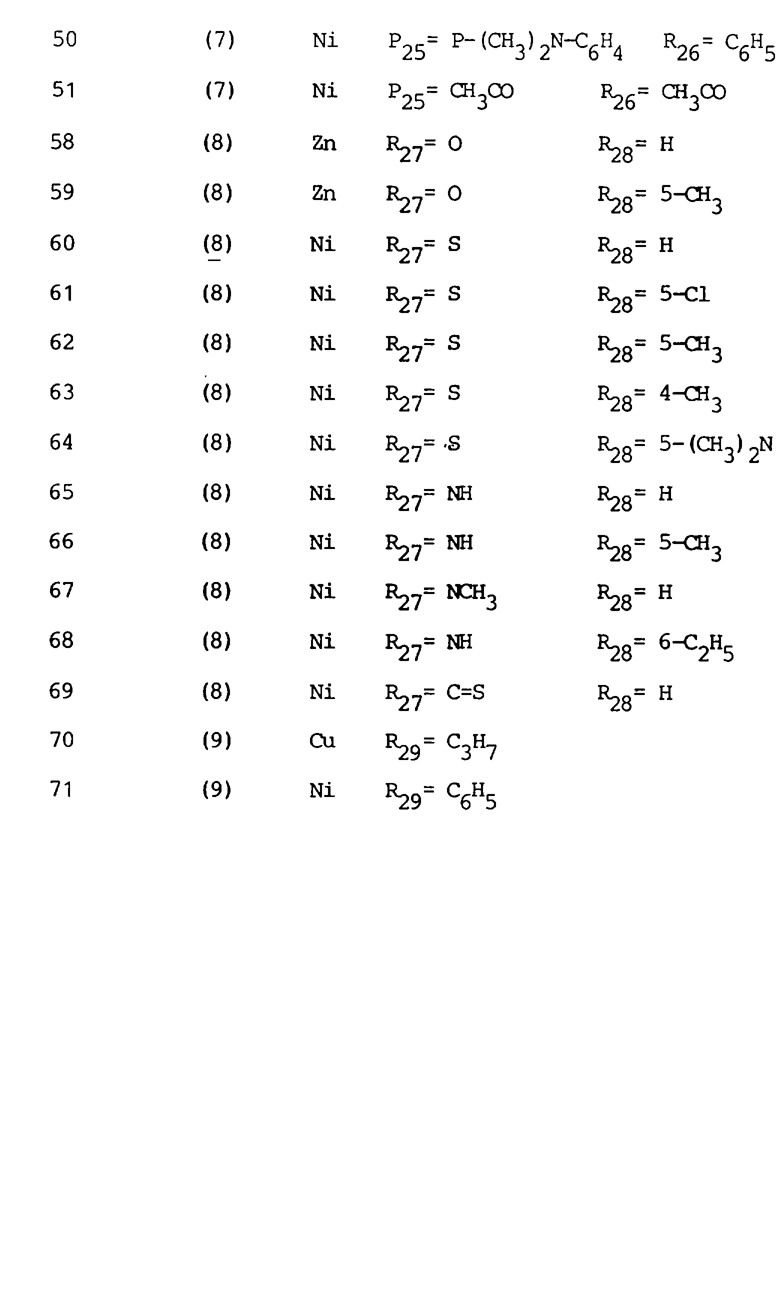

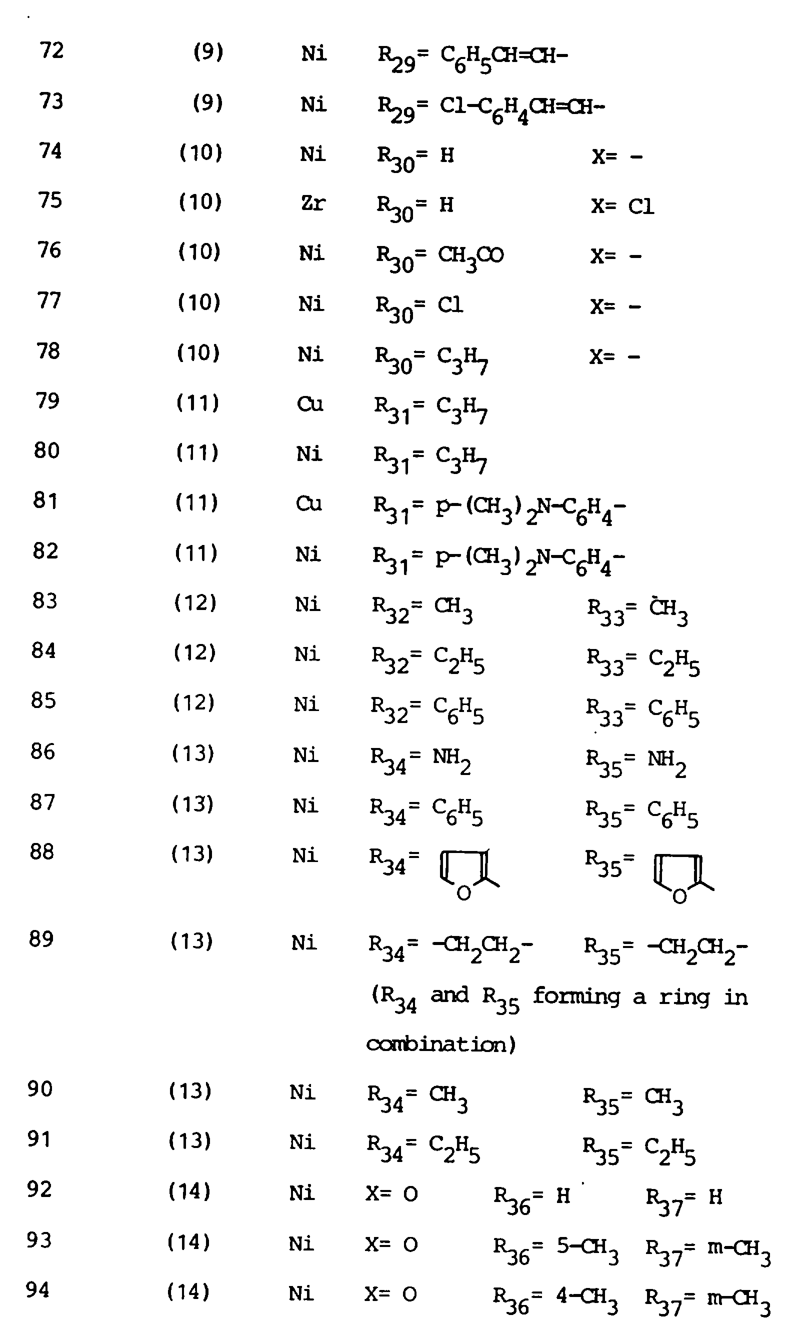

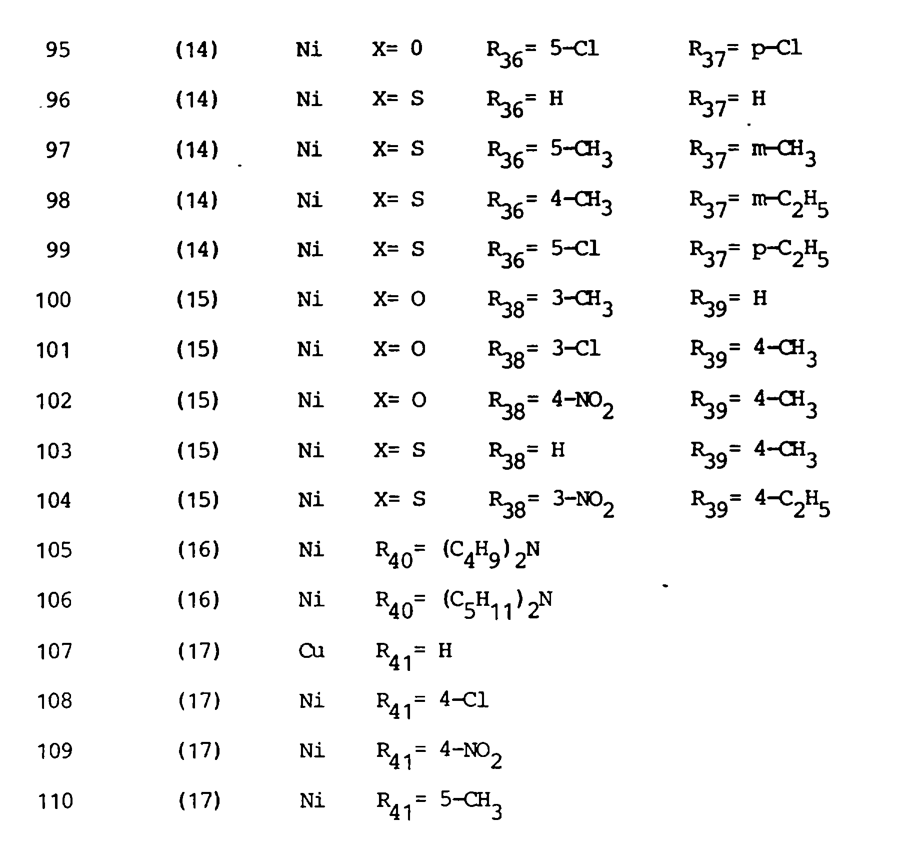

The above-mentioned metal chelate compounds used in the present invention may be synthesized according to methods as disclosed by Hurry B. Gray, Journal of the Am. Chem. Soc., vol. 88, pp 43-50 or by Shlantz and Mybake, Journal of the Am. Chem. Soc., vol. 87, pp 1483-1489.

The above metal chelate compounds show an absorptivity in the near infrared region, are useful as stable light-absorbing colorants and further have good mutual solubility with or dispersibility in a polymer liquid crystal. Some metal chelate compounds among them show dichroism, and a thermally stable guest-host type memory or display device can be obtained by mixing such a compound showing dichroism within a polymer liquid crystal. It is possible to incorporate two or more species of the metal chelate compound in a polymer liquid crystal.

The metal chelate compound may be added in a proportion of 0.01 - 10 wt. %, preferably 0.05 - 5 wt. %, of the liquid crystal.

In combination with the above metal chelate compound, it is possible to use another near-infrared absorbing colorant or dichroic colorant. Representative examples of such near-infrared absorbing colorants may include cyanine, merocyanine, phthalocyanine, tetrahydrocholine, dioxazine, anthraquinone, triphenodithiazine, xanthene, triphenylmethane, pyrylium, croconium, azulene and triphenylamine. These colorants can be added in a proportion of 0.01 to 10 wt. % of the polymer liquid crystal so as not to give ill effects to the glass transition point or melting point of the polymer liquid crystal.

As another class of the additive for enhancing absorptivity in the near-infrared region used in the present invention, a soluble organic large cyclic colorant is added in addition to the polymer liquid crystal.

It has been generally known that a colorant having a bar shape similarly as a liquid crystal molecule has a good solubility in a liquid crystal and does not hinder the liquid crystal phase. However, such a bar-shaped colorant soluble in a liquid crystal generally has a low molecular weight and remarkably lowers the melting point or glass transition point of a polymer liquid crystal when added to the latter.

According to our investigation, it has been found that a soluble organic large cyclic colorant having a planar or plate-like shape instead of a bar shape and having 10 or more carbon atoms, preferably 20 or more carbon atoms, not only has an excellent durability in resistance to the repetition of an optical recording process including recording, reproduction and erasure but also shows good solubility because of its shape in a polymer liquid crystal, to thereby provide a high absorptivity, good S/N ratio and low bit error rate (BER). Further, it has been also found that such a large cyclic colorant, because of its two-dimensional extension, does not hinder the liquid crystal characteristic of a polymer liquid crystal nor does it result in an increased mobility which leads to a remarkable lowering in clear point (T_{Cl}), glass transition point (Tg) and melting point.

Examples of the organic large cyclic colorant may include azaannulenes and annulenes (cyclic hydrocarbons composed of conjugated double bonds and having 18 or more carbon atoms) which may be provided with an alkyl substituent in order to enhance the solubility in a polymer liquid crystal but can be further provided with another substituent within an extent of not hindering the solubility.

More particularly, examples of the large cyclic colorant may include phthalocyanines naphthalocyanines, tetrabenzoporphyrin, and substituted and non-substituted porphyrins.

Specific examples of the large cyclic colorants may include phthalocyanines and naphthalocyanines represented by the following formula (I), some of which may also be classified as metal chelate compounds: 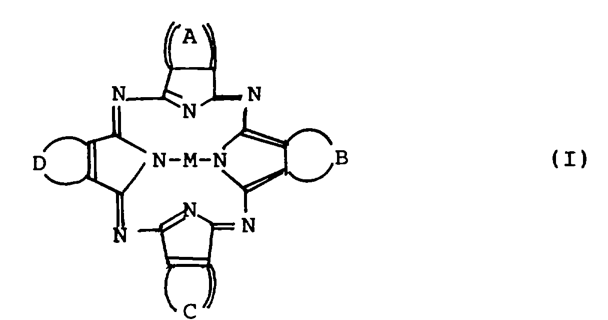 wherein the symbols A, B, C and D respectively denote the following divalent group:
A : 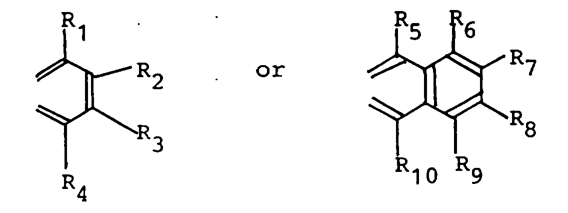 B, C and D : 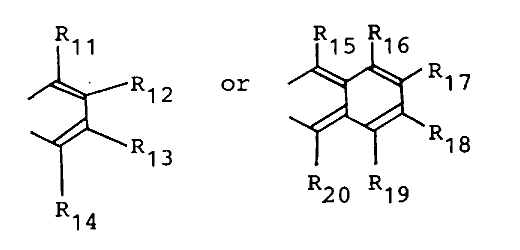 wherein R₁ = R₂₀ respectively denote a hydrogen group, a linear or branched alkyl, alkoxy or alkenyl group having 4 - 20 carbon atoms, or a group selected from the following:
-SiQ₁Q₂Q₃, -SQ₄, -COQ₅, COOQ₆ and -NQ₇Q₈, wherein Q₁ - Q₈ respectively denote a hydrogen atom, or a linear or branched alkyl or alkenyl group having 1 - 20 carbon atoms;
M denotes Ge, Sn, transition metal, Al, Ga, In, alkaline earth metal, lanthanide element or actinide element, or an oxide, halogenide or alkoxide thereof.

It is particularly important to use a semiconductor laser having a wavelength in the region of near infrared to visible red from the view point of the compactness and high performance of a recording and reproduction apparatus. As soluble organic large cyclic colorants showing an absorptivity in the wavelength region, naphthalocyanines are particularly preferred, among which those represented by the following formula (II) are particularly suitable for the recording medium of the present invention because of excellent solubility thereof. 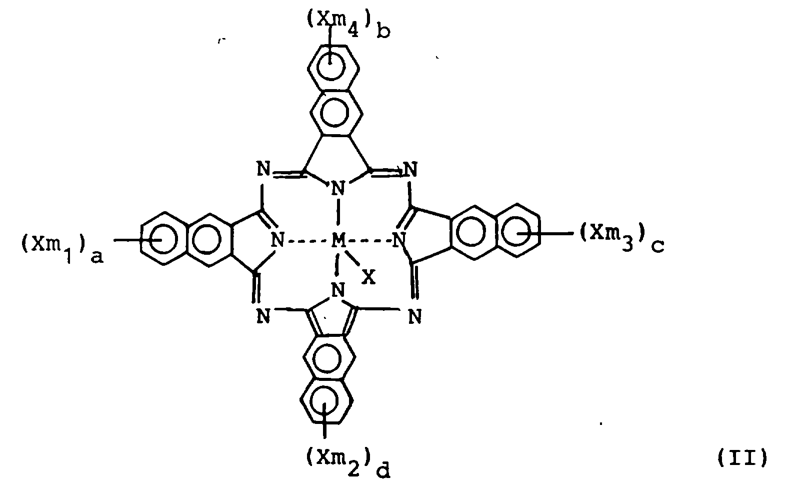 wherein M denotes Ge, Sn, transition metal, Al, Ga, In, alkaline earth metal, lanthanide element or actinide element; X denotes, for example, halogen atom, alkyl group, carboxyl group, alkoxy group, ether group or alkenyl group; Xm₁ - Xm₄ respectively denote halogen atom alkyl group, sulfamoyl group, ether group or alkenyl group; a - d are respectively a number of 0 - 4 satisfying the relationship of a+b+c+d ≧ 1.

These compounds may be easily prepared, for example, by a method disclosed in Japanese Laid-Open Patent Application JP-A (Kokai) Sho 62-90291.

The soluble organic large cyclic colorant may be added to a polymer liquid crystal in a proportion of 0.01 - 40 wt. %, preferably 0.1 - 25 wt. %, of the latter.

The organic large cyclic colorant can be used in combination with another near-infrared-absorbing colorant or dichroic colorant, examples of which may include cyanine, merocyanine, naphthoquinone, tetrahydrocholine, dioxazine, anthraquinone, triphenodithiazine, xanthene, triphenylmethane pyrylium, croconium, azulene, triphenylamine, and metal chelate compound. These additional colorants can be added in a proportion of ordinarily 0.01 - 10 wt. %, preferably 0.01 - 2 wt. %, of the polymer liquid crystal so as not to give ill effects to the glass transition point or melting point of the polymer liquid crystal.

In addition, it is possible to add an ultraviolet absorber, antioxidant or low-molecular weight liquid crystal within an extent of not giving ill effects to the glass transition point or melting point of the polymer liquid crystal.

The polymer liquid crystal used in the present invention is a thermotropic one, of which a mesomorphic phase of nematic, smectic, chiral smectic, cholesteric or discotic phase is utilized, provided that the recording layer comprises at least a chiral smectic polymer liquid crystal.

Specific examples of the polymer liquid crystal may include: main chain type polymer liquid crystal, side chain-type polymer liquid crystal, main chain and side chain-type polymer liquid crystal and discotic polymer liquid crystal as listed in the following Table 2.

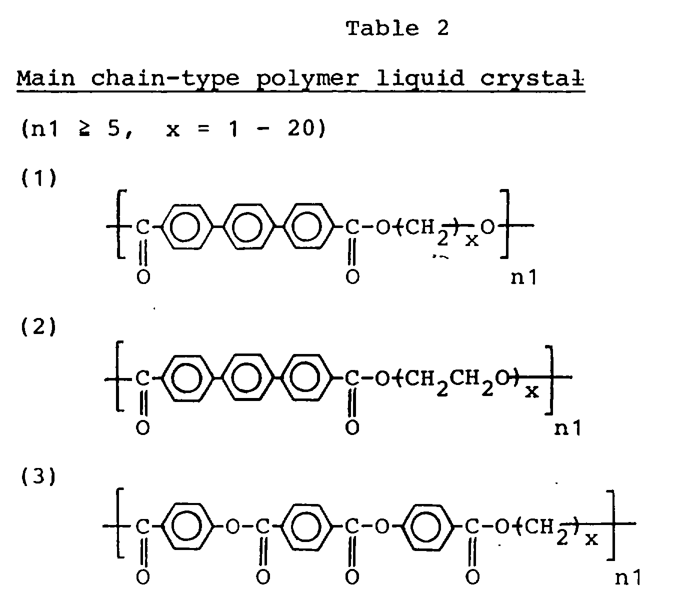

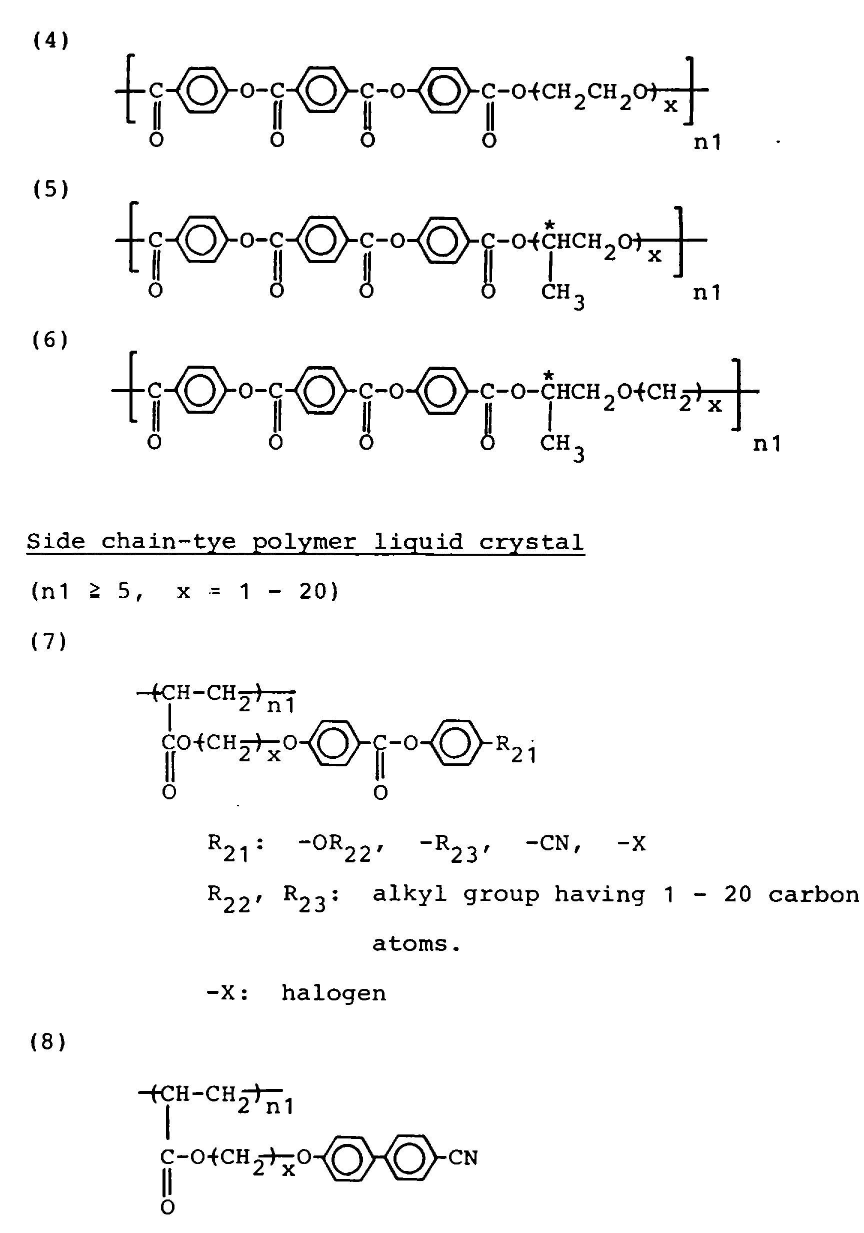

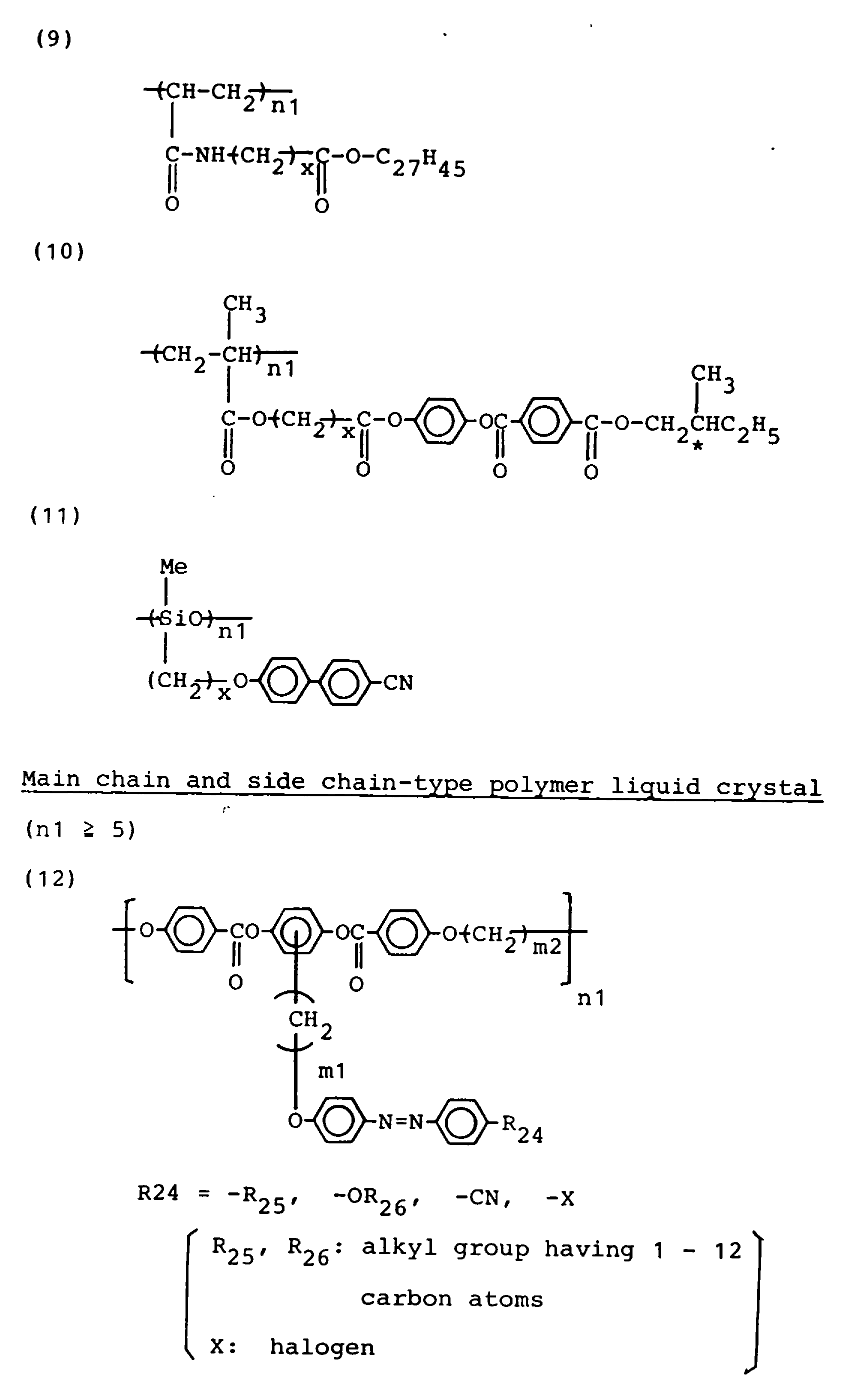

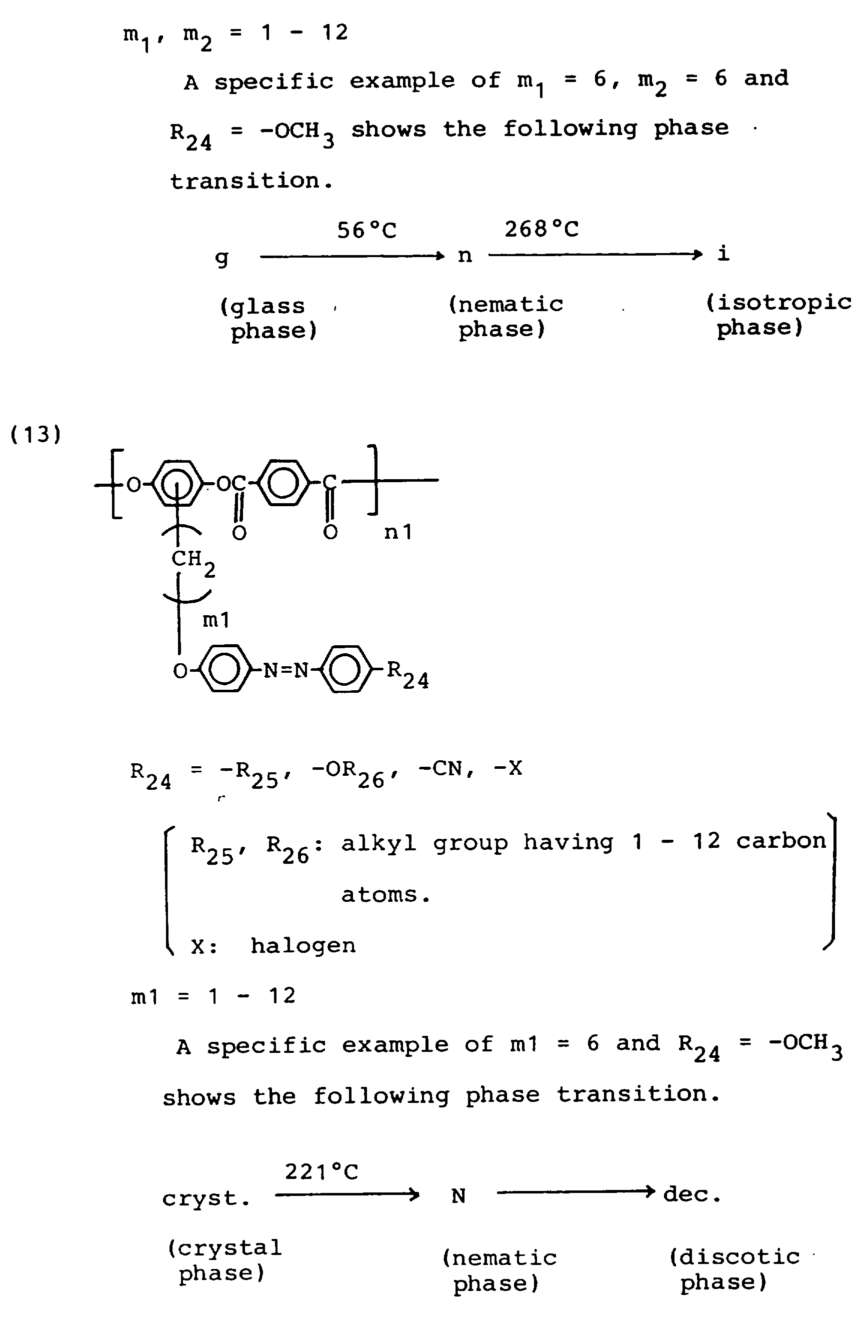

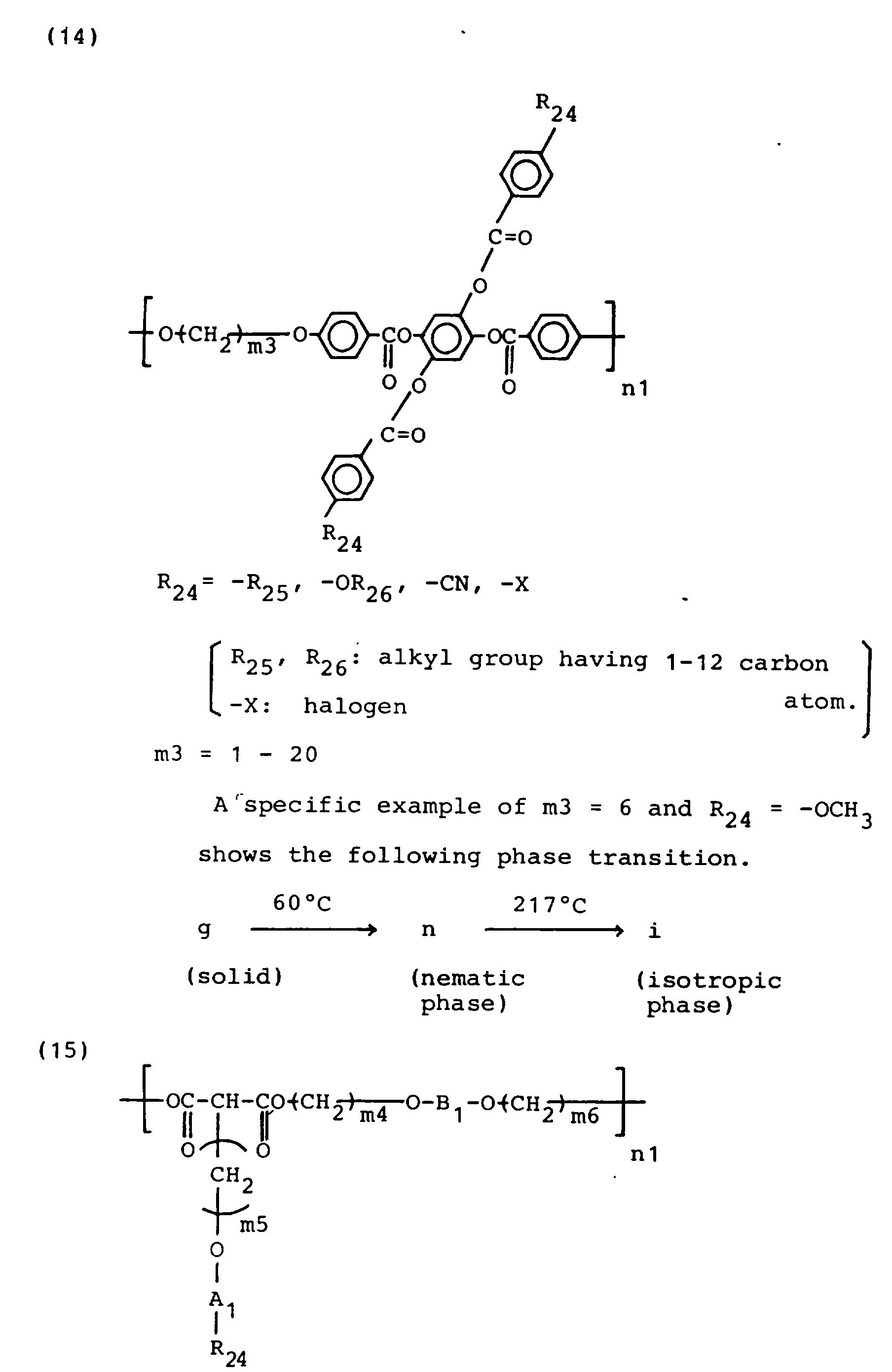

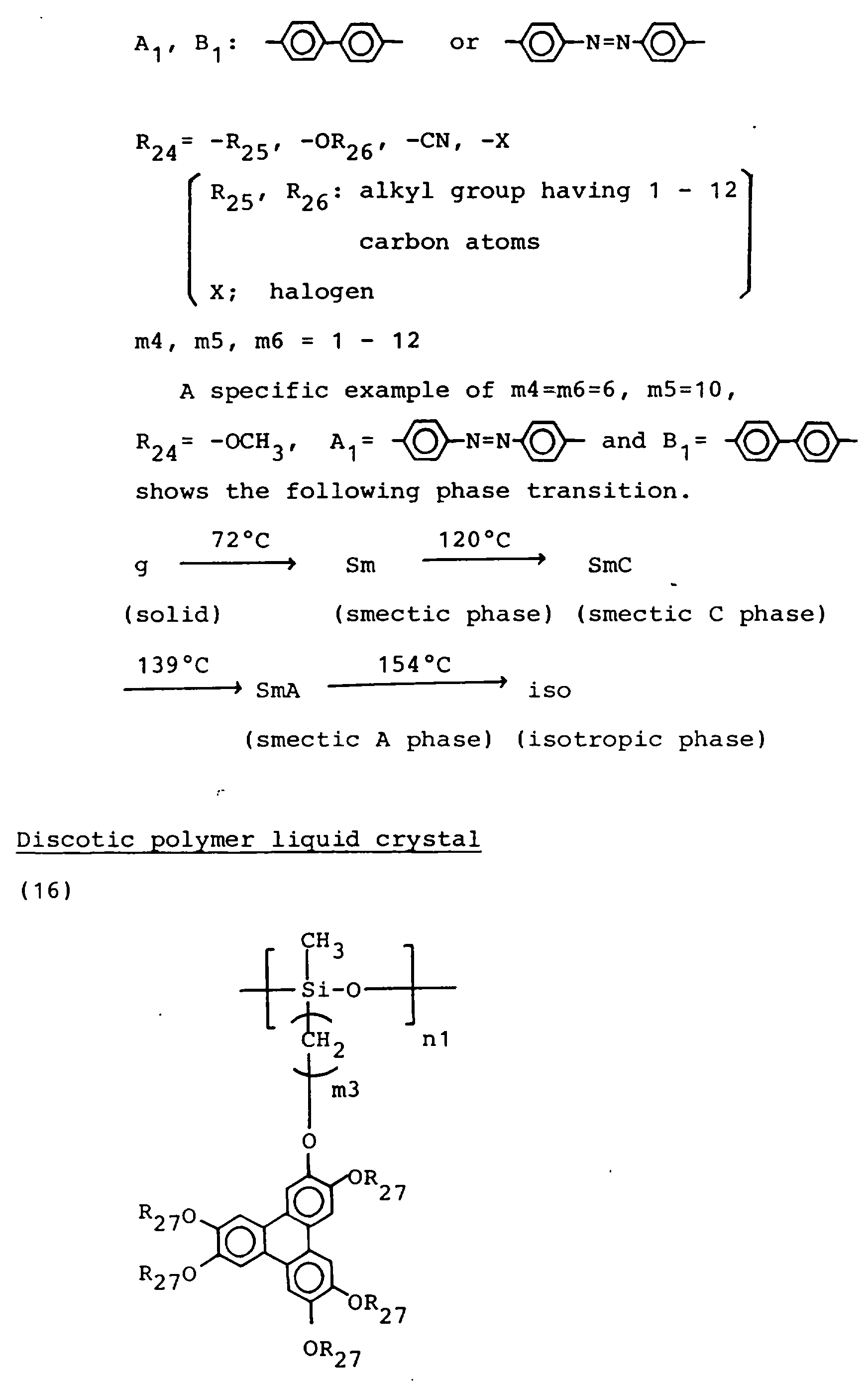

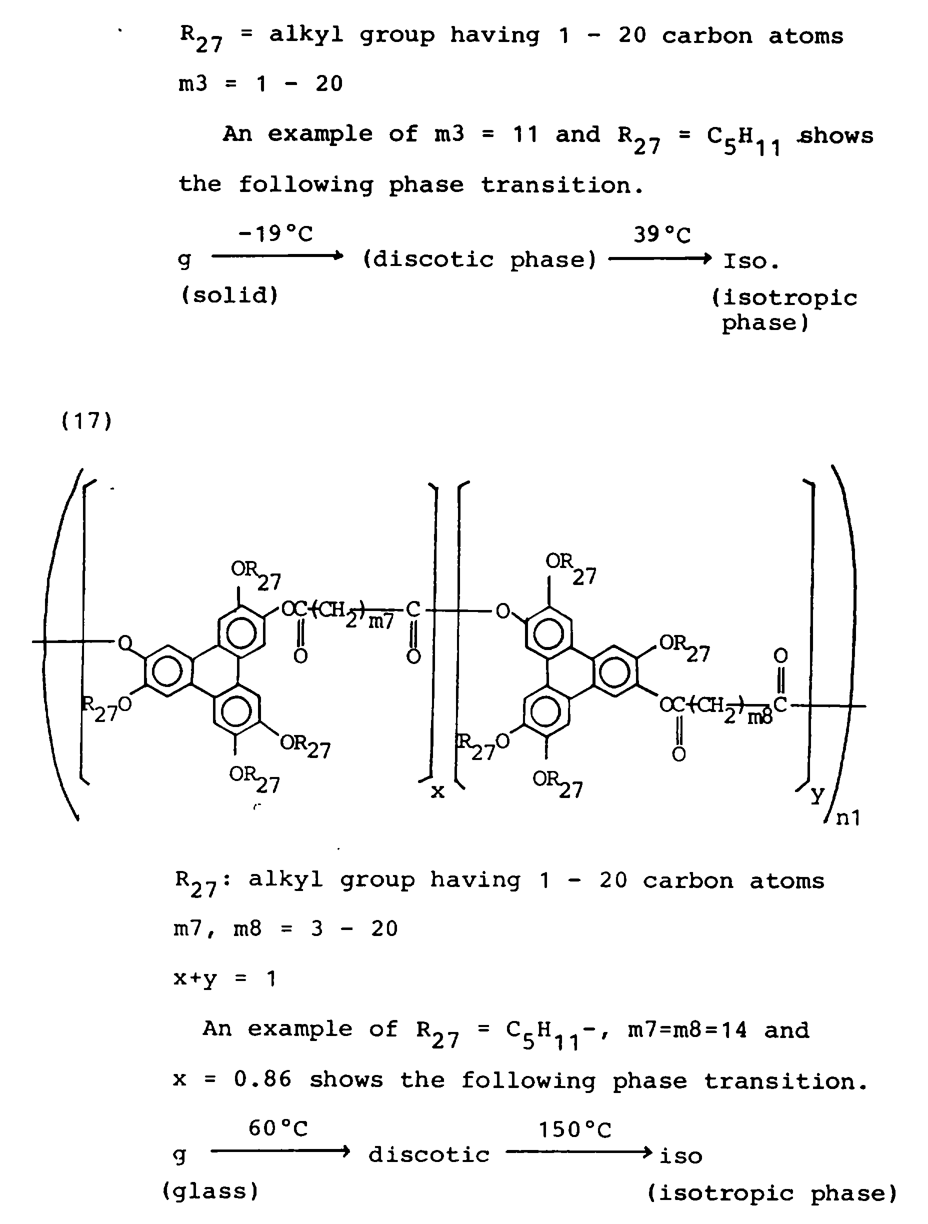

In the present invention, it is possible to use a mixture of a plurality of different polymer liquid crystals. It is also possible to use a mixture of a polymer liquid crystal and a low-molecular weight liquid crystal. In such a case, it is preferred to restrict the amount of the low-molecular weight liquid crystal to 10 parts by weight or less with respect to 1 part by weight of the polymer liquid crystal. For this purpose, an ordinary low-molecular weight liquid crystal may be used without any restriction. Herein, the term "low-molecular weight (or non-polymeric) liquid crystal" is used in contrast with the term polymer liquid crystal and refers to a liquid crystal or mesomorphic compound which is substantially free of repetition of a mesogen unit and has two recurring mesogen units at the maximum, if any. The term "polymer liquid crystal" used herein refers to a liquid crystal or mesomorphic compound having a number of recurring units of 5 or more, preferably 10 or more.

In the present invention, a ferroelectric liquid crystal having a chiral asymmetric carbon atom can be used alone or compatibly mixed with a polymer liquid crystal as enumerated above to provide a ferroelectric polymer liquid crystal composition.

It is further possible as desired to incorporate in the recording layer, in addition to the polymer liquid crystal described above, an ordinary polymer, such as olefin type resin, acrylic resin, polystyrene resin, polyester resin, polyurethane resin, or polycarbonate resin; an oligomer, an antioxidant, a plasticizer, an ultraviolet absorber, a quencher, etc.

The polymer liquid crystal or its composition may be formed into a recording layer in the form of a film by coating a substrate with a solution of the polymer liquid crystal in an appropriate solvent by spin coating, dipping etc., followed by drying; by sandwiching a polymer liquid crystal with a pair of substrates followed by pressing under heating; or by using a film of a polymer liquid crystal prepared in advance. The recording layer of a polymer liquid crystal may preferably have a thickness in the range of 0.01 - 100 µm.

In the case of effecting recording and erasure through utilization of transition between liquid crystal phase and isotropic phase and fixing of the resultant states by using a glass transition point, a recording layer containing a polymer liquid crystal need not be subjected to an aligning treatment but can be simply formed by application of a polymer liquid crystal composition as described above.

On the other hand, a generally known orientation treatment can be applied in order to effect uniform alignment of the polymer liquid crystal in a particular direction. Such known orientation methods may include, stretching, rubbing, oblique vapor deposition, application of a shearing force to a polymer liquid crystal sandwiched between a pair of substrates, gradual phase transition under application of a magnetic field, and orientation by using spacer edges.

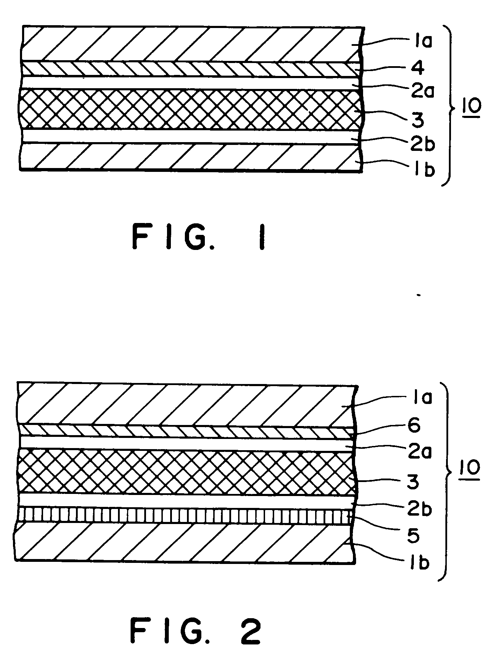

Figures 1 and 2 are respectively a schematic sectional view showing an embodiment of the data recording medium according to the present invention. A data recording medium shown in Figure 1 comprises a pair of substrates 1a and 1b having thereon alignment control films 2a and 2b, respectively, a recording layer 3 according to the present invention disposed between the substrates 1a and 1b, and a reflection layer 4. Further, a data recording medium shown in Figure 2 comprises members 1a, 1b, 2a, 2b and 3 which are similar to those denoted by the corresponding numerals in Figure 1, and a transparent electrode 5 and an electrode and reflection layer 6.

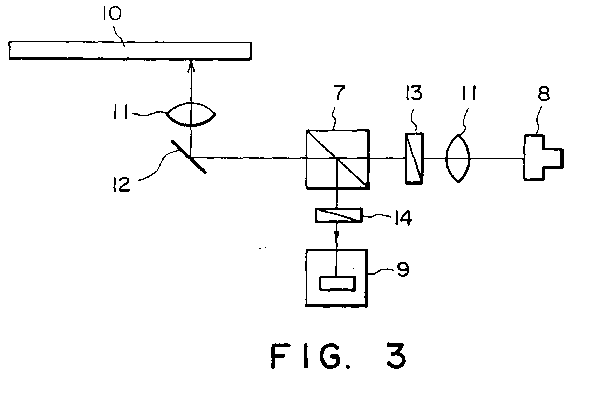

Figure 3 shows an outline of a system for illuminating such a data recording medium 10 with a laser beam to effect writing and readout. Referring to Figure 3, for the recording, a laser beam emitted from a semiconductor laser 8 as a laser oscillator is focused through optical systems 11 and a reflection mirror 12 to be incident on the recording medium 10.

For the readout, a laser beam emitted from the semiconductor laser 8 is passed through the optical systems 11 the polarizer 13, a beam splitter 7 and the reflection mirror 12 to illuminate the recording medium 10, and the reflected light from the recording medium 10 is again passed through the beam splitter 7 and an analyzer 14 to be detected by an optical detector 9.

Hereinbelow, the present invention will be explained in more detail with reference to Examples.

### Reference Example

A glass substrate in the form of a disk with a diameter of 130 mm and a thickness of 1.2 mm was coated with a polyamic acid solution ("PIQ" (trade name), mfd. by Hitachi Kasei Kogyo K.K.), followed by heating and rubbing, to be provided with a polyimide alignment film.

On the polyimide film, the following side chain-type polymer liquid crystal and a metal chelate compound (Compound No. 3 in the above Table 1) in a proportion of 0.15 wt. % of the liquid crystal were mixed with 1,1,2-trichloroethane and applied by spinner coating, followed by drying, to form a 3 µm-thick recording layer.

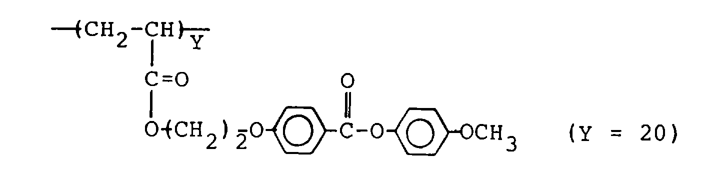

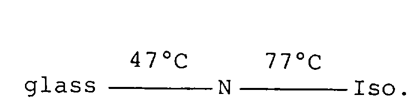

Separately, a glass substrate coated with a reflection film (vapor-deposited aluminum film) was provided with a polyimide alignment film similarly as above and superposed on the recording layer of the polymer liquid crystal by the medium of a 3 µm-thick spacer disposed at the periphery. A partial section of the thus formed laminate is shown in Figure 1. The above laminate was heated to 90°C and gradually cooled to provide the liquid crystal layer with a nematic phase, whereby a data recording medium was prepared.

As shown in Figure 3, the recording medium was irradiated from its transparent substrate side with a laser beam of 830 nm from a semiconductor laser 8 at a recording power of 3.0 mW, whereby the irradiated part caused an alignment disorder to form a scattering state. Then, the thus formed record was reproduced by illumination at a readout power of 0.3 mW. The reflected light was detected by the optical detector 9 to provide a reproduction contrast ratio (= |A-B|/A; A and B: signal intensities from non-recorded and recorded portions, respectively).

The recording medium after the recording was subjected to an erasure operation comprising heating to 90°C followed by gradual cooling to cause re-alignment of the recorded portion.

The above recording and erasure operations were repeated in 300 cycles, and the recording medium after the 300 cycles of the recording and erasure (more exactly, after recording) was subjected to the above reproduction operation to measure a reproduction contrast ratio as described above.

The measured reproduction contrast ratios will be shown in Table 5 appearing hereinafter together with those obtained by other Examples and Comparative Examples.

### Comparative Example 1

A data recording medium was prepared and evaluated in the same manner as in the Reference Example except that the metal chelate compound mixed with the polymer liquid crystal was repeated by the following colorant in an amount of 0.1 wt. % of the polymer liquid crystal.

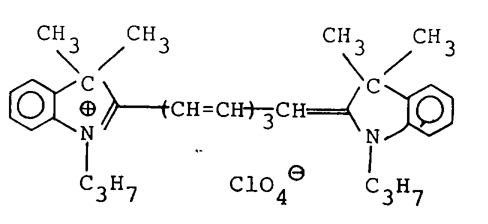

### Example 1

A glass substrate of 130 mm diameter and 1.2 mm thick provided with a transparent electrode layer of vapor deposited ITO was coated with a polyamic acid solution ("PIQ", Hitachi Kasei Kogyo K.K.), followed by heating and rubbing, to form a polyimide alignment film.

On the polyimide film, the following polymer liquid crystal and a metal chelate compound (Compound No. 3 in Table 1) in a proportion of 0.15 wt. % of the liquid crystal were dissolved in 1,1,2-trichloroethane and applied by spinner coating, followed by drying, to form a 3 µm-thick liquid crystal layer.

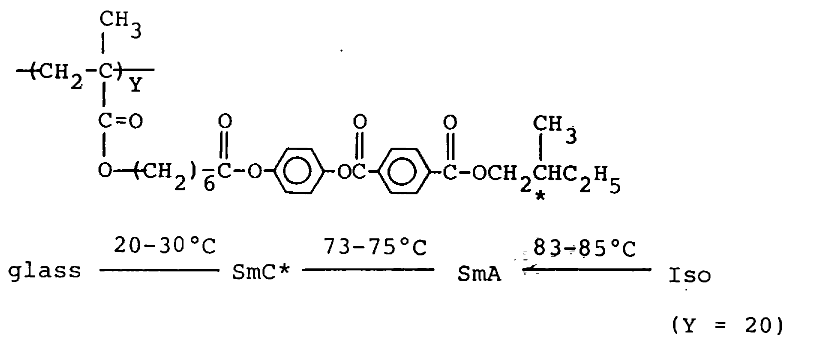

Separately, a glass substrate coated with an electrode and reflection layer (vapor-deposited aluminum film) was provided with a polyimide alignment film similarly as above and superposed similarly as in the Reference Example on the above-prepared liquid crystal recording layer by the medium of a 3 µm-thick spacer. A partial section of the thus formed laminate is shown in Figure 2.

The above laminate was heated to 90°C and gradually cooled to have the liquid crystal layer assume a uniaxially aligned smectic phase. Under this state, an electric field of 5 V/µm was applied between the electrodes to uniformize the polarization direction, whereby a data recording medium was prepared.

The recording layer of the recording medium thus prepared was supplied with a reverse electric field of 5 V/µm between the transparent electrode (ITO) and the Al electrode and simultaneously irradiated from the transparent electrode side with a semiconductor laser beam of 830 nm at a recording power of 3.0 mW, whereby the irradiated part was heated to cause an inversion of the spontaneous polarization, so that recording was effected.

Then, the thus recorded recording medium was illuminated with a laser light at a reproduction power of 0.3 mW in the absence of an electric field and the reflected light containing differences in birefringence due to differences in polarization direction was incident to an optical detector to measure a reproduction contrast ratio (= |A-B|/A, A and B: reflected light intensities from recorded and non-recorded portions, respectively).

The whole area or the recorded portion of the recording layer after the recording was irradiated with a laser light at a power of 3.5 mW while being supplied with an electric field of the normal direction (the same as one used in preparation) to effect erasure of the record.

The above recording and erasure cycle was repeated 300 time and thereafter the reproduction contrast ratio of the recording medium was measured again.

### Examples 2 - 7

Data recording media were prepared and evaluated in the same manner as in Example 11 except that the metal chelate compound mixed with the ferroelectric polymer liquid crystal was replaced by those shown in the following Table 3.

**Table 3**

| | Metal chelate compound No. (show in Table 1 above) | The production of the metal chelate compound to the polymer liquid crystal (wt.%) |
|---|---|---|
| Example 2 | 9 | 0.10 |
| 3 | 18 | 0.15 |
| 4 | 25 | 0.15 |
| 5 | 38 | 0.15 |
| 6 | 43 | 0.10 |
| 7 | 49 | 0.15 |

### Comparative Example 2

A data recording medium was prepared and evaluated in the same manner as in Example 1 except the metal chelate compound was replaced by the one used in Comparative Example 1.

The contrast ratios measured in the above Example and Comparative Examples both after the initial recording and after the 300 cycles of recording and erasure and summarized in the following Table 4.

**Table 4**

| | Contrast ratio (initial) | Contrast ratio (after 300 cycles of recording-erasure) |
|---|---|---|
| Reference Example | 0.51 | 0.50 |
| Comparative Example 1 | 0.51 | 0.29 |
| Example 1 | 0.60 | 0.55 |
| 2 | 0.58 | 0.55 |
| 3 | 0.51 | 0.50 |
| 4 | 0.59 | 0.53 |
| 5 | 0.60 | 0.60 |
| 6 | 0.56 | 0.55 |
| 7 | 0.57 | 0.54 |
| Comparative Example 2 | 0.55 | 0.31 |

### Example 8

A data recording medium was prepared in the same manner as in Example 1 except that the metal chelate compound (Compound No. 3 in Table 1) was replaced by Compound No. 64 in Table 1.

The data recording medium was subjected to measurement of the contrast ratios at the initial stage and after the 300 cycles of recording-erasure in the same manner as in Example 1.

### Examples 9-14

Data recording media were prepared and subjected to measurement of reproduction contrast ratios in the same manner as in Example 1 except that the metal chelate compound mixed with the ferroelectric polymer liquid crystal was replaced by those shown in the following Table 5.

**Table 5**

| | Metal chelate compound No. (show in Table 1 above) | The proportion of the metal chelate compound to the polymer liquid crystal (wt. %) |
|---|---|---|
| Example 9 | 63 | 0.10 |
| 10 | 72 | 0.15 |
| 11 | 81 | 0.15 |
| 12 | 84 | 0.15 |
| 13 | 88 | 0.10 |
| 14 | 105 | 0.15 |

The contrast ratios measured in the above Examples 8-14 both after the initial recording and after the 300 cycles of recording and erasure are summarized in the following Table 6.

**Table 6**

| | Contrast ratio (initial) | Contrast ratio (after 300 cycles of recording-erasure) |
|---|---|---|
| 8 | 0.59 | 0.56 |
| 9 | 0.60 | 0.54 |
| 10 | 0.52 | 0.50 |
| 11 | 0.51 | 0.48 |
| 12 | 0.53 | 0.51 |
| 13 | 0.55 | 0.54 |
| 14 | 0.50 | 0.47 |

## Claims

1. A data recording medium comprising a recording layer which comprises a chiral smectic polymer liquid crystal, and a colorant selected from the group consisting of metal chelate compounds represented by the following formulas (1) to (17) soluble in the chiral smectic polymer liquid crystal: 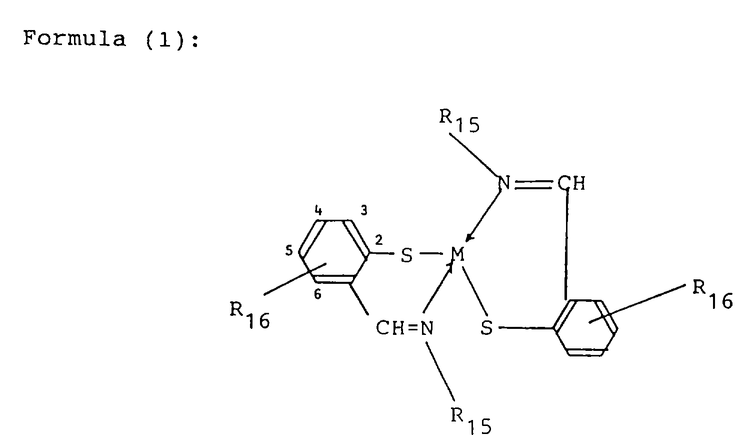 wherein R₁₅ denotes a hydrogen atom, hydroxyl group or alkyl group capable of being connected with another R₁₅; R₁₆ denotes alkyl group, halogen atom, hydrogen atom, nitro group, or benzo condensed group; and M denotes a center metal of Cu, Ni, Co or Pd. 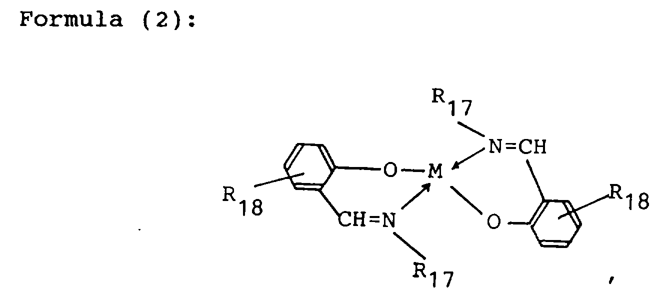 wherein R₁₇ denotes a hydrogen atom, hydroxyl group, alkyl group or aryl group capable of being connected with another R₁₇; R₁₈ denotes a halogen atom, alkyl group, nitro group or condensed benzo group; and M denotes Cu, Ni, Co or Pd. 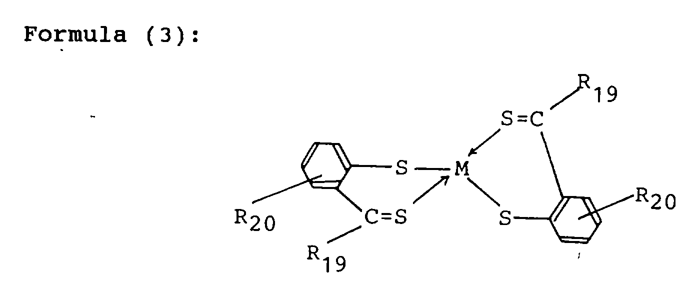 wherein R₁₉ denotes an alkyl group or aryl group; R₂₀ denotes a hydrogen atom, halogen atom, alkyl group, aryl group, nitro group or condensed benzo group; and M denotes Cu, Ni or Pd. 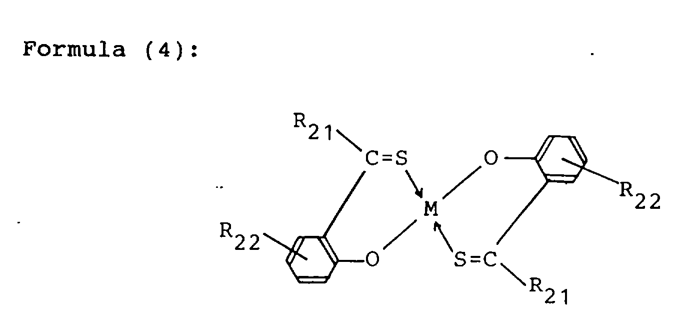 wherein R₂₁ denotes an alkyl group or aryl group; R₂₂ denotes a hydrogen atom, halogen atom, alkyl group or condensed benzo group; and M denotes Cu, Ni or Pd. 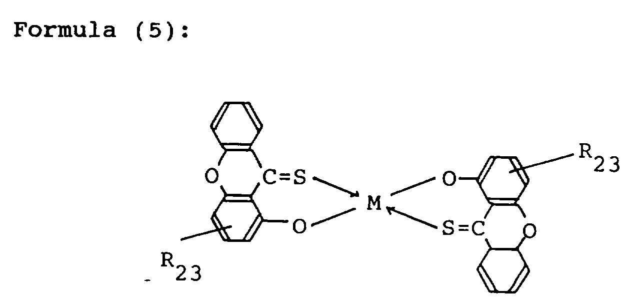 wherein R₂₃ denotes a hydrogen atom or alkyl group; and M denotes Cu or Ni. 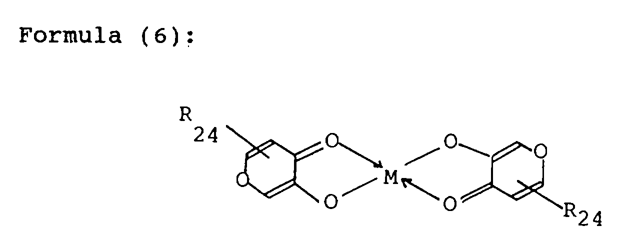 wherein R₂₄ denotes a hydrogen atom or alkyl group, and M denotes Cu, Ni, Co or Mn. 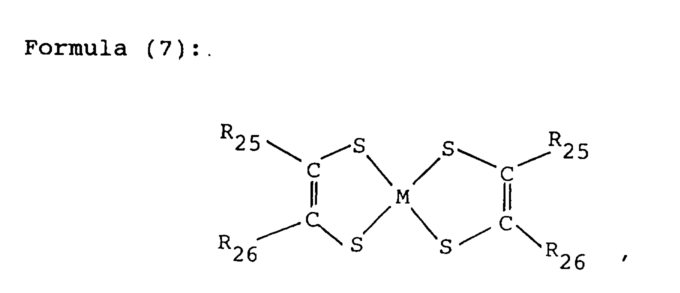 wherein R₂₅ and R₂₆ respectively denote a substituted or non-substituted alkyl group, acyl group or aryl group and R₂₅ and R₂₆ are capable of forming an aromatic ring in combination; M denotes Cu, Ni, Co or Pd which can have a charge and a counter ion. 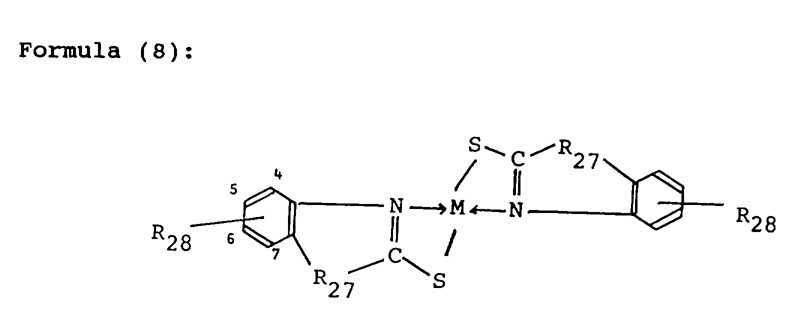 wherein R₂₇ denotes a sulfur atom, substituted or non-substituted amino group, oxygen atom or thioketone group; R₂₈ denotes a hydrogen atom, alkyl group, halogen atom or amino group; and M denotes Zn, Cu or Ni. 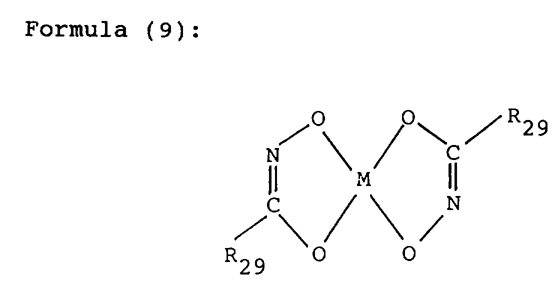 wherein R₂₉ denotes an alkyl group, aryl group or styryl group; and M denotes Cu, Ni or Co. 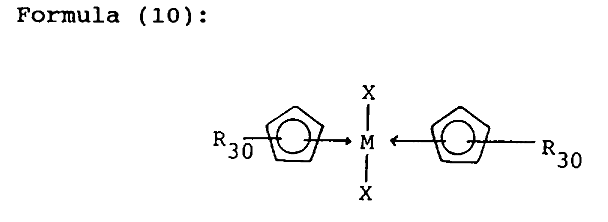 wherein R₃₀ denotes a hydrogen atom, halogen atom, alkyl group, acyl group or aryl group; X is optional and may denote Cl; and M denotes Ni or Zr. 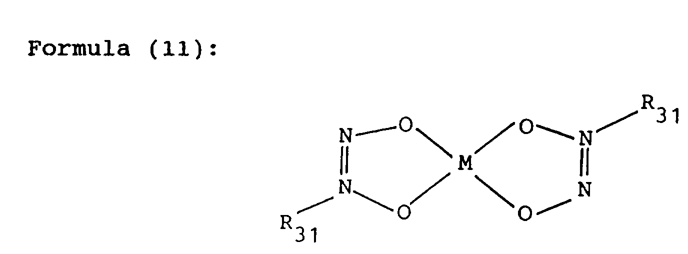 wherein R₃₁ denotes an alkyl group or aryl group; and M denotes Cu, Ni or Co. 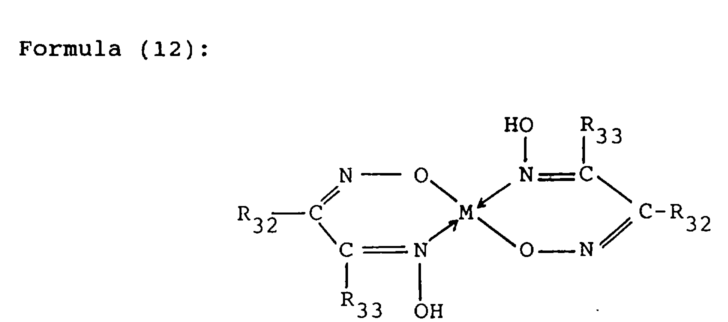 wherein R₃₂ and R₃₃ respectively denote an alkyl group or aryl group; and M denotes Ni. 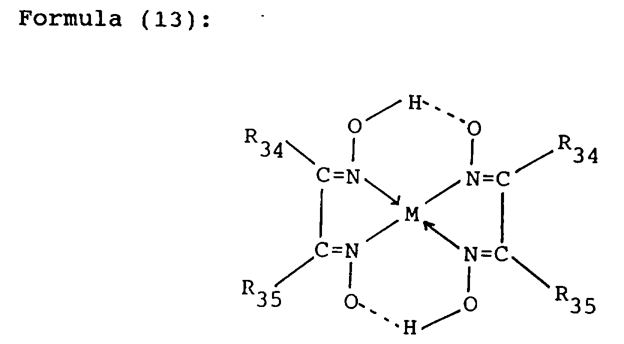 wherein R₃₄ and R₃₅ respectively denote an alkyl group, amino group, aryl group or furan group capable of forming an alicyclic ring in combination with each other; and M denotes Ni. 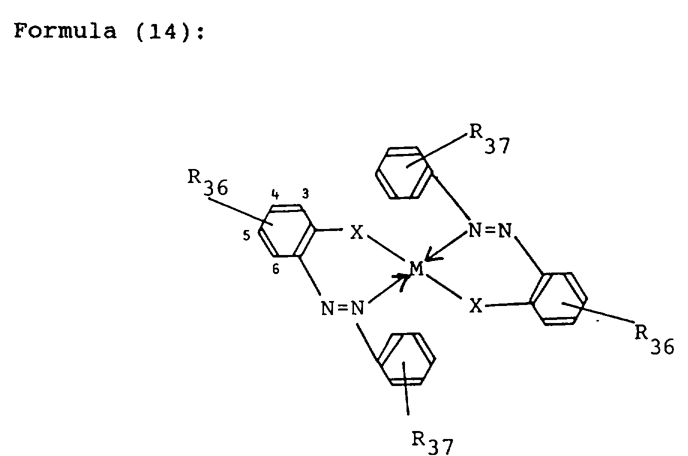 wherein R₃₆ and R₃₇ denote a hydrogen atom, halogen atom or alkyl group; X denotes an oxygen atom or sulfur atom; and M denotes Ni. 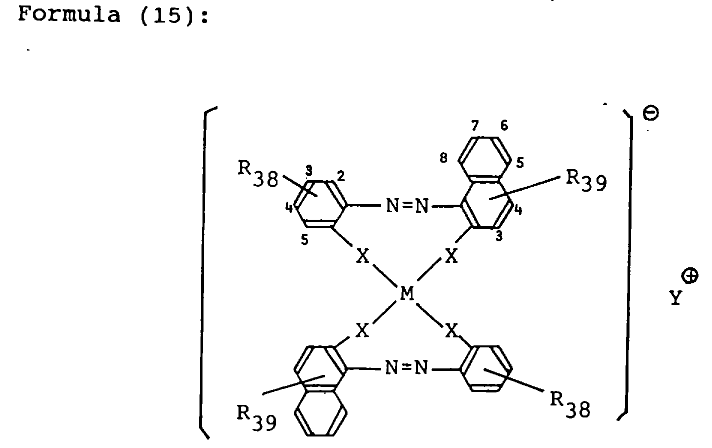 wherein R₃₈ and R₃₉ respectively denote a hydrogen atom, alkyl group, halogen atom or nitro group; X denotes an oxygen atom or sulfur atom; M denotes Ni; and Y⊕ denotes a quarternary ammonium cation. 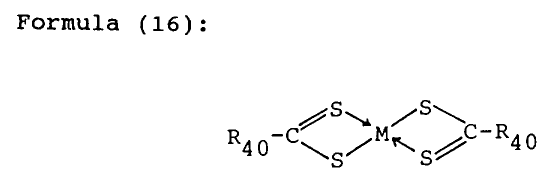 wherein R₄₀ denotes an amino group; and M denotes Cu, Ni, Co or Pd. 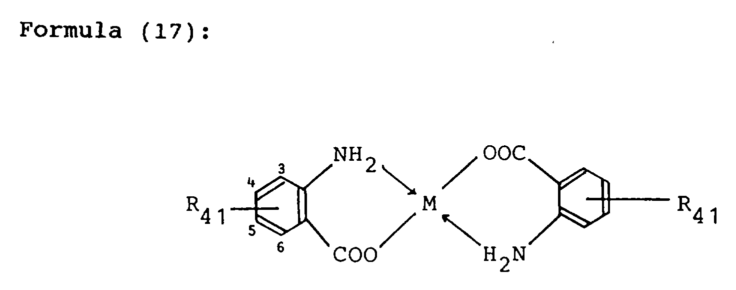 wherein R41 denotes a hydrogen atom, halogen atom, alkyl group, acyl group, nitro group or alkoxy group; and M denotes Zn, Cu, Ni or Co.

2. A medium according to claim 1, wherein said recording layer further comprises a soluble colorant selected from the group consisting of phthalocyanines, naphthalocyanines, porphyrines and tetrabenzoporphyrines.

3. A medium according to claim 1, wherein said metal chelate compound is added in a proportion of 0.01 - 10 wt.% of the liquid crystal.

4. A medium according to claim 1, wherein said chiral smectic liquid crystal is a ferroelectric liquid crystal.

## Patentansprüche

1. Datenaufzeichnungsträger mit einer Aufzeichnungsschicht, die einen chiralen smektischen polymeren Flüssigkristall und ein Farbmittel umfaßt, das aus der Gruppe ausgewählt ist, die aus Metallchelatverbindungen, die durch die folgenden Formeln (1) bis (17) wiedergegeben werden, besteht, und in dem chiralen smektischen polymeren Flüssigkristall löslich ist: 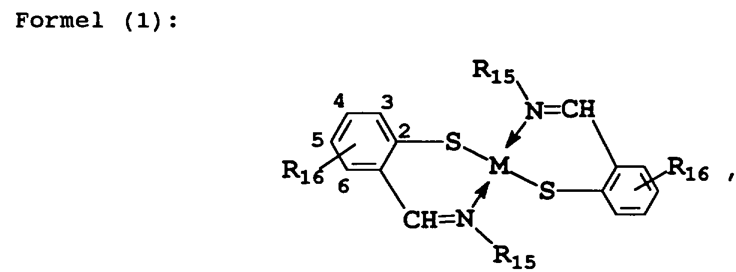 worin R₁₅ ein Wasserstoffatom, eine Hydroxylgruppe oder eine Alkylgruppe, die mit einem anderen R₁₅ verbunden sein kann, bezeichnet; R₁₆ eine Alkylgruppe, ein Halogenatom, ein Wasserstoffatom, eine Nitrogruppe oder eine kondensierte Benzogruppe bezeichnet und M ein Zentralatom, und zwar Cu, Ni, Co oder Pd, bezeichnet; 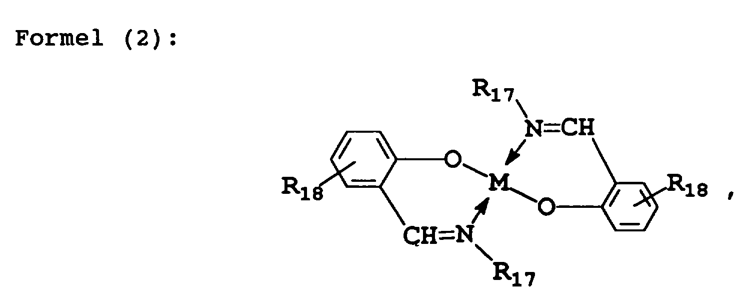 worin R₁₇ ein Wasserstoffatom, eine Hydroxylgruppe, eine Alkylgruppe oder eine Arylgruppe, die mit einem anderen R₁₇ verbunden sein kann, bezeichnet; R₁₈ ein Halogenatom, eine Alkylgruppe, eine Nitrogruppe oder eine kondensierte Benzogruppe bezeichnet und M Cu, Ni, Co oder Pd bezeichnet; 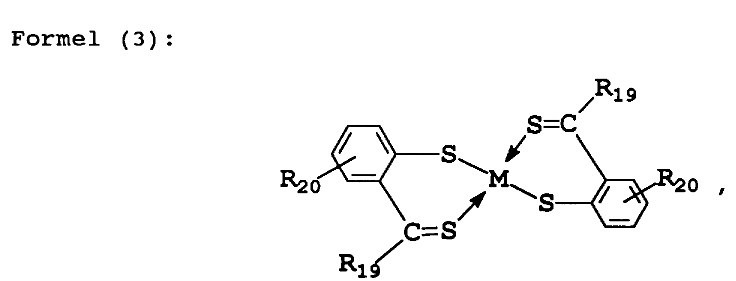 worin R₁₉ eine Alkylgruppe oder eine Arylgruppe bezeichnet; R₂₀ ein Wasserstoffatom, ein Halogenatom, eine Alkylgruppe, eine Arylgruppe, eine Nitrogruppe oder eine kondensierte Benzogruppe bezeichnet und M Cu, Ni oder Pd bezeichnet; 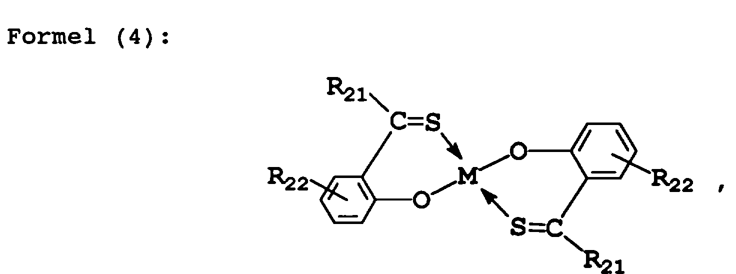 worin R₂₁ eine Alkylgruppe oder eine Arylgruppe bezeichnet; R₂₂ ein Wasserstoffatom, ein Halogenatom, eine Alkylgruppe oder eine kondensierte Benzogruppe bezeichnet und M Cu, Ni oder Pd bezeichnet; 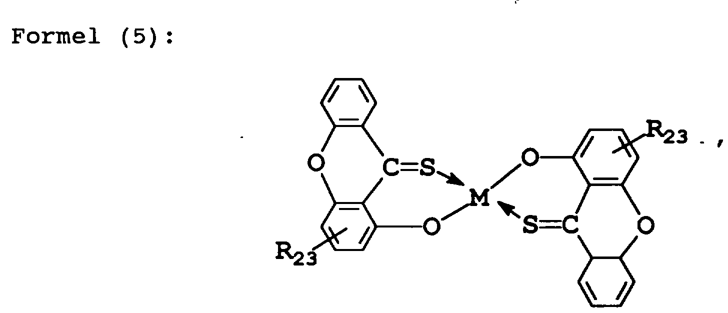 worin R₂₃ ein Wasserstoffatom oder eine Alkylgruppe bezeichnet und M Cu oder Ni bezeichnet; 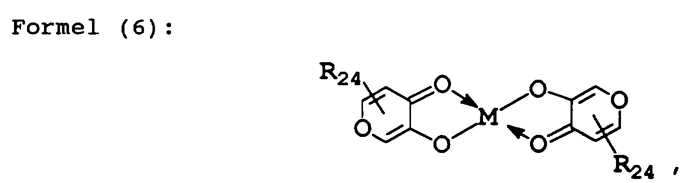 worin R₂₄ ein Wasserstoffatom oder eine Alkylgruppe bezeichnet und M Cu, Ni, Co oder Mn bezeichnet; 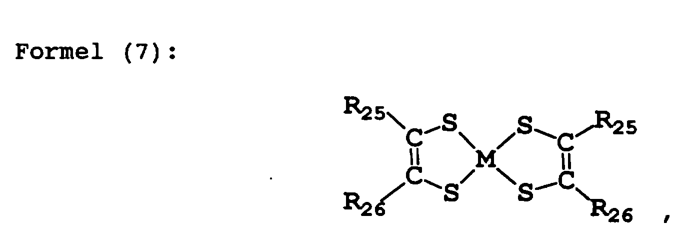 worin R₂₅ und R₂₆ jeweils eine substituierte oder nichtsubstituierte Alkylgruppe, Acylgruppe oder Arylgruppe bezeichnen und R₂₅ und R₂₆ in Kombination einen aromatischen Ring bilden können und M Cu, Ni, Co oder Pd bezeichnet, das eine Ladung und ein Gegenion haben kann; 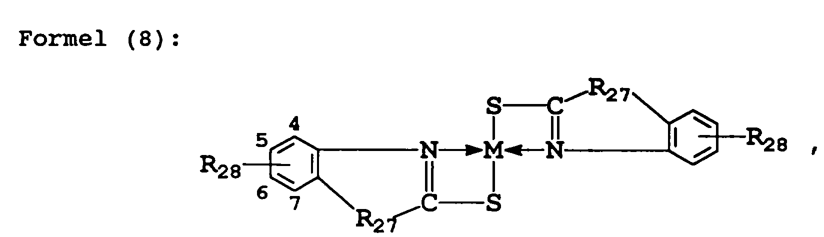 worin R₂₇ ein Schwefelatom, eine substituierte oder nichtsubstituierte Aminogruppe, ein Sauerstoffatom oder eine Thioketongruppe bezeichnet; R₂₈ ein Wasserstoffatom, eine Alkylgruppe, ein Halogenatom oder eine Aminogruppe bezeichnet und M Zn, Cu oder Ni bezeichnet; 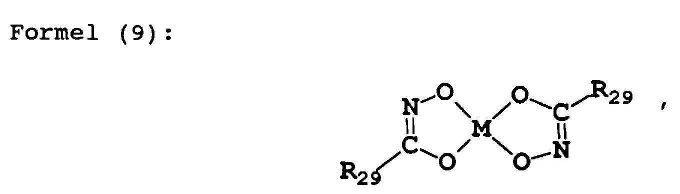 worin R₂₉ eine Alkylgruppe, eine Arylgruppe oder eine Styrylgruppe bezeichnet und M Cu, Ni oder Co bezeichnet; 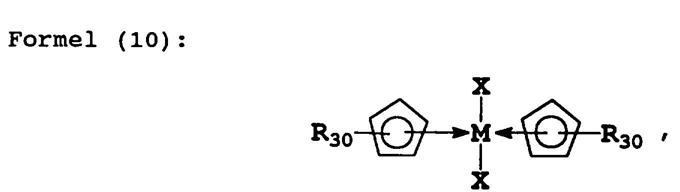 worin R₃₀ ein Wasserstoffatom, ein Halogenatom, eine Alkylgruppe, eine Acylgruppe oder eine Arylgruppe bezeichnet; X wahlweise ist und Cl bezeichnen kann und M Ni oder Zr bezeichnet; 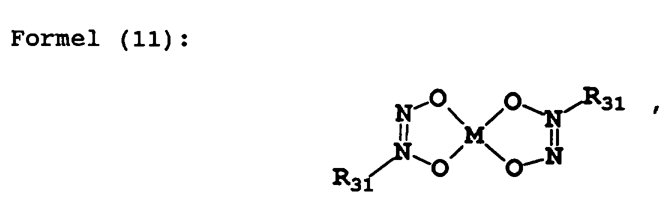 worin R₃₁ eine Alkylgruppe oder eine Arylgruppe bezeichnet und M Cu, Ni oder Co bezeichnet; 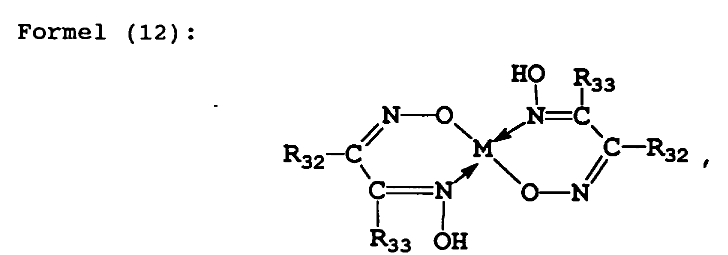 worin R₃₂ und R₃₃ jeweils eine Alkylgruppe oder eine Arylgruppe bezeichnen und M Ni bezeichnet; 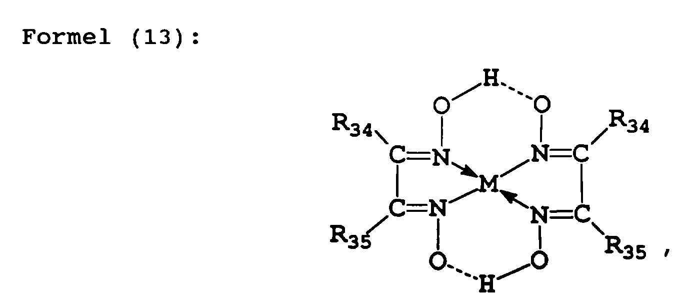 worin R₃₄ und R₃₅ jeweils eine Alkylgruppe, eine Aminogruppe, eine Arylgruppe oder eine Furangruppe bezeichnen, die in Kombination miteinander einen alicyclischen Ring bilden können; und M Ni bezeichnet; 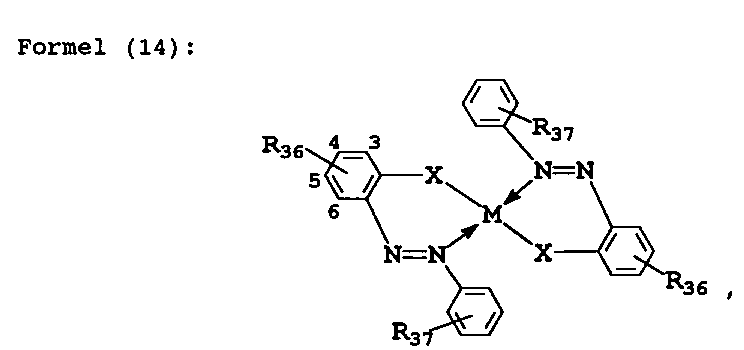 worin R₃₆ und R₃₇ ein Wasserstoffatom, ein Halogenatom oder eine Alkylgruppe bezeichnen; X ein Sauerstoffatom oder ein Schwefelatom bezeichnet und M Ni bezeichnet; 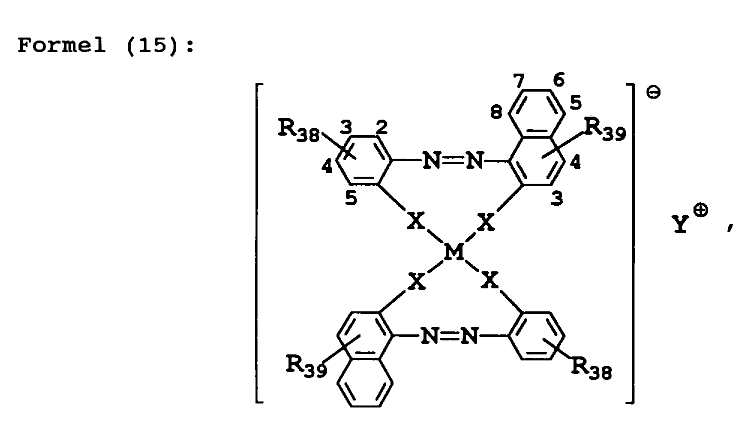 worin R₃₈ und R₃₉ jeweils ein Wasserstoffatom, eine Alkylgruppe, ein Halogenatom oder eine Nitrogruppe bezeichnen; X ein Sauerstoffatom oder ein Schwefelatom bezeichnet; M Ni bezeichnet und Y^{⊕} ein quartäres Ammoniumkation bezeichnet; 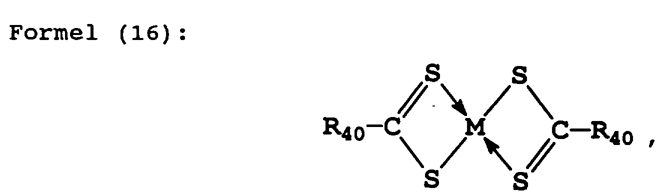 worin R₄₀ eine Aminogruppe bezeichnet und M Cu, Ni, Co oder Pd bezeichnet; 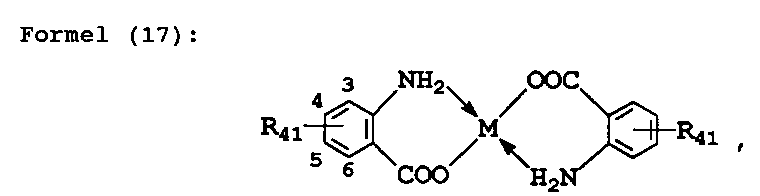 worin R₄₁ ein Wasserstoffatom, ein Halogenatom, eine Alkylgruppe, eine Acylgruppe, eine Nitrogruppe oder eine Alkoxygruppe bezeichnet und M Zn, Cu, Ni oder Co bezeichnet.

2. Aufzeichnungsträger nach Anspruch 1, bei dem die erwähnte Aufzeichnungsschicht ferner ein lösliches Farbmittel umfaßt, das aus der Gruppe ausgewählt ist, die aus Phthalocyaninen, Naphthalocyaninen, Porphyrinen und Tetrabenzoporphyrinen besteht.

3. Aufzeichnungsträger nach Anspruch 1, bei dem die erwähnte Metallchelatverbindung in einem Anteil von 0,01 bis 10 Masse-% des Flüssigkristalls zugesetzt ist.

4. Aufzeichnungsträger nach Anspruch 1, bei dem der erwähnte chirale smektische Flüssigkristall ein ferroelektrischer Flüssigkristall ist.

## Revendications

1. Support d'enregistrement de données, comprenant une couche d'enregistrement qui comprend un cristal liquide polymérique smectique chiral, et un colorant choisi dans le groupe consistant en chélates métalliques représentés par les formules (1) à (17) suivantes, soluble dans le cristal liquide polymérique smectique chiral : 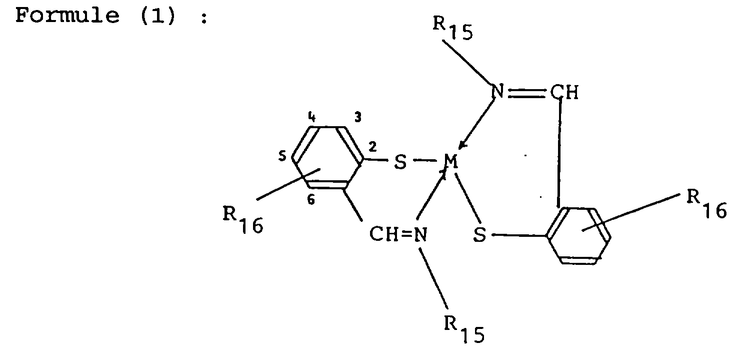 dans laquelle R₁₅ représente un atome d'hydrogène, un groupe hydroxyle ou un groupe alkyle pouvant être connecté à un autre groupe R₁₅ ; R₁₆ représente un groupe alkyle, un atome d'halogène, un atome d'hydrogène, un groupe nitro ou un groupe benzo-condensé ; et M représente un métal central consistant en Cu, Ni, Co ou Pd. 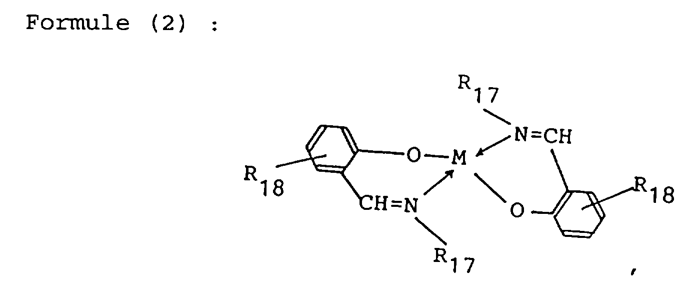 dans laquelle R₁₇ représente un atome d'hydrogène, un groupe hydroxyle, un groupe alkyle ou un groupe aryle pouvant être connecté à un autre groupe R₁₇ ; R₁₈ représente un atome d'halogène, un groupe alkyle, un groupe nitro ou un groupe benzo-condensé ; et M représente Cu, Ni, Co ou Pd. 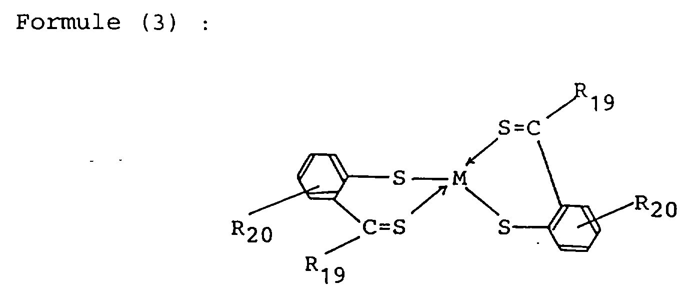 dans laquelle R₁₉ représente un groupe alkyle ou un groupe aryle ; R₂₀ représente un atome d'hydrogène, un atome d'halogène, un groupe alkyle, un groupe aryle, un groupe nitro ou un groupe benzo-condensé ; et M représente Cu, Ni ou Pd. 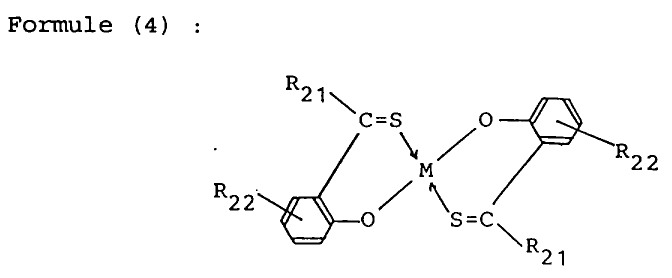 dans laquelle R₂₁ représente un groupe alkyle ou un groupe aryle ; R₂₂ représente un atome d'hydrogène, un atome d'halogène, un groupe alkyle ou un groupe benzo-condensé ; et M représente Cu, Ni ou Pd. 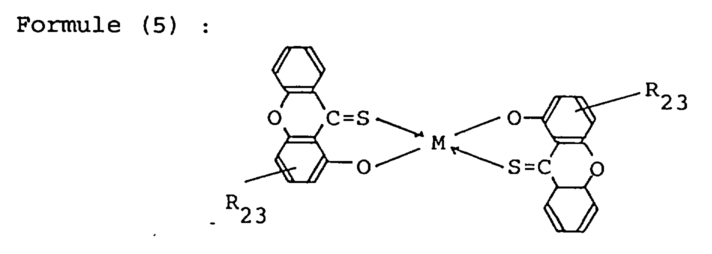 dans laquelle R₂₃ représente un atome d'hydrogène ou un groupe alkyle ; et M représente Cu ou Ni. 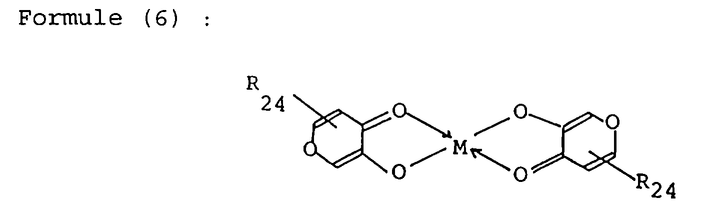 dans laquelle R₂₄ représente un atome d'hydrogène ou un groupe alkyle, et M représente Cu, Ni, Co ou Mn. 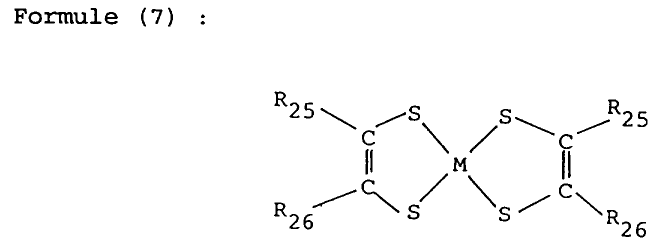 dans laquelle R₂₅ et R₂₆ représentent, respectivement, un groupe alkyle, acyle ou aryle substitué ou non substitué et R₂₅ et R₂₆, en association, peuvent former un noyau aromatique ; M représente Cu, Ni, Co ou Pd pouvant porter une charge et un ion complémentaire. 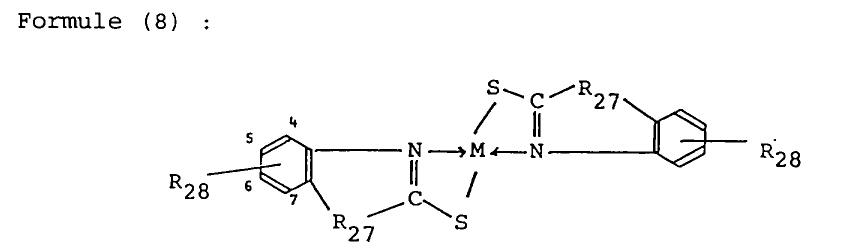 dans laquelle R₂₇ représente un atome de soufre, un groupe amino substitué ou non substitué, un atome d'oxygène ou un groupe thiocétone ; R₂₈ représente un atome d'hydrogène, un groupe alkyle, un atome d'halogène ou un groupe amino ; et M représente Zn, Cu ou Ni. 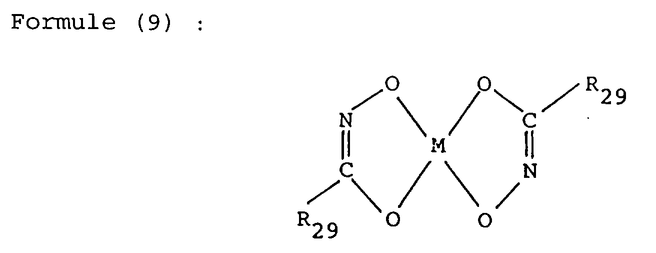 dans laquelle R₂₉ représente un groupe alkyle, un groupe aryle ou un groupe styryle ; et M représente Cu, Ni ou Co. 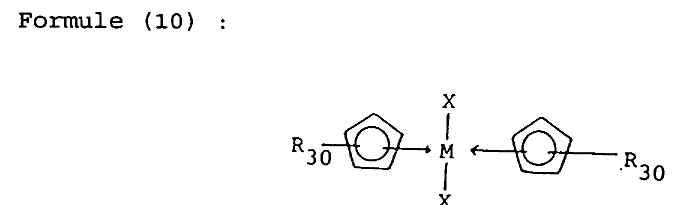 dans laquelle R₃₀ représente un atome d'hydrogène, un atome d'halogène, un groupe alkyle, un groupe acyle ou un groupe aryle ; X est facultatif et peut représenter Cl ; et M représente Ni ou Zr. 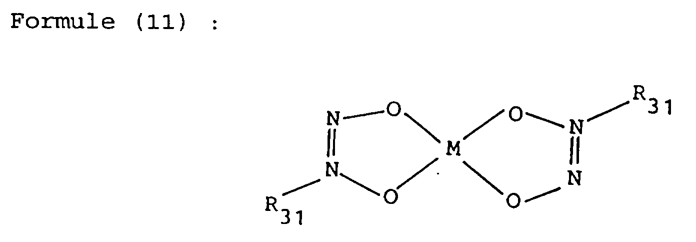 dans laquelle R₃₁ représente un groupe alkyle ou un groupe aryle ; et M représente Cu, Ni ou Co. 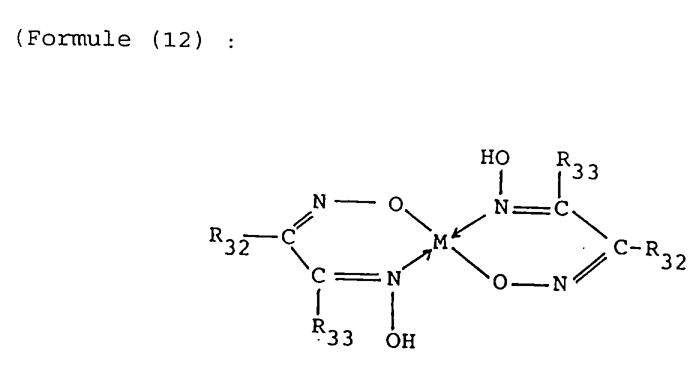 dans laquelle R₃₂ et R₃₃ représentent, respectivement, un groupe alkyle ou un groupe aryle ; et M représente Ni. 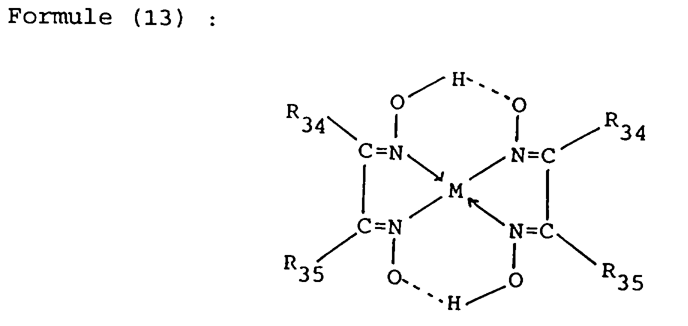 dans laquelle R₃₄ et R₃₅ représentent, respectivement, un groupe alkyle, un groupe amino, un groupe aryle ou un groupe furanne pouvant, lorsqu'ils sont associés mutuellement, former un noyau alicyclique ; et M représente Ni. 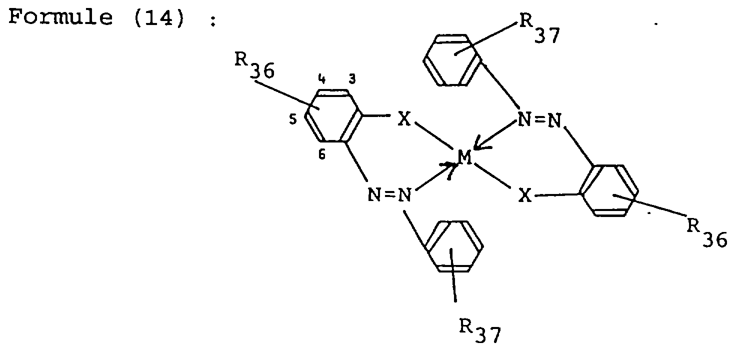 dans laquelle R₃₆ et R₃₇ représentent un atome d'hydrogène, un atome d'halogène ou un groupe alkyle ; X représente un atome d'oxygène ou un atome de soufre ; M représente Ni. 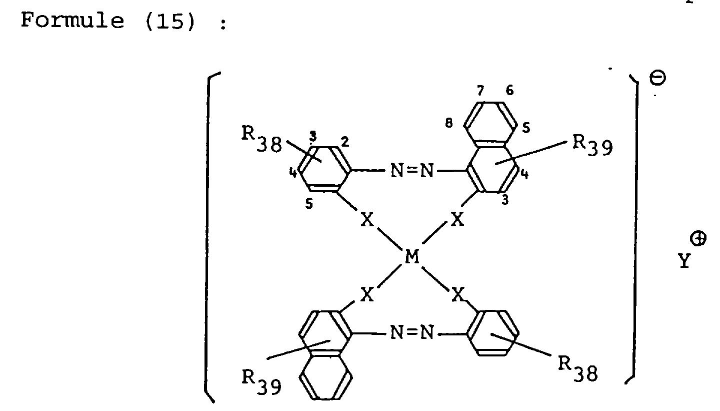 dans laquelle R₃₈ et R₃₉ représentent, respectivement, un atome d'hydrogène, un groupe alkyle, un atome d'halogène ou un groupe nitro ; X représente un atome d'oxygène ou un atome de soufre ; M représente Ni ; et Y⊕ représente un cation ammonium quaternaire. 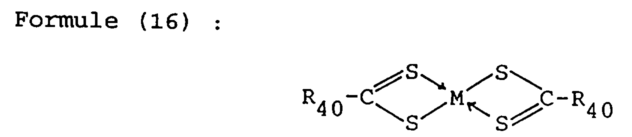 dans laquelle R₄₀ représente un groupe amino ; et M représente Cu, Ni, Co ou Pd. 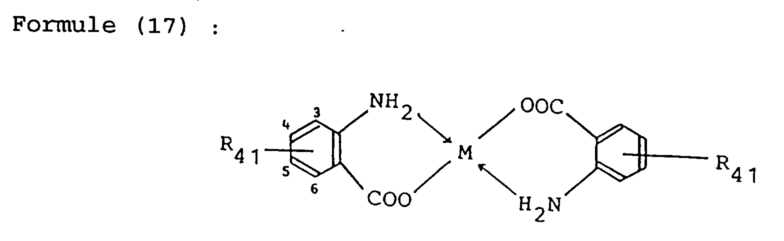 dans laquelle R₄₁ représente un atome d'hydrogène, un atome d'halogène un groupe alkyle, un groupe acyle, un groupe nitro ou un groupe alkoxy ; et M représente Zn, Cu, Ni ou Co.

2. Support suivant la revendication 1, dans lequel la couche d'enregistrement comprend en outre un colorant soluble choisi dans le groupe consistant en phtalocyanines, naphtalocyanines, porphyrines et tétrabenzoporphyrines.

3. Support suivant la revendication 1, dans lequel le chélate métallique est ajouté en une proportion de 0,01 à 10 % en poids du cristal liquide.

4. Support suivant la revendication 1, dans lequel le cristal liquide smectique chiral est un cristal liquide ferro-électrique.
